# EUROPEAN PATENT SPECIFICATION

(11) **EP 3 330 940 B1**
(45) Date of publication and mention of the grant of the patent: **25.03.2020**
(21) Application number: 17204742.5
(22) Date of filing: 30.11.2017
(51) Int. Cl.: G08C 17/02, H04Q 9/00

(54) **SYSTEMS AND METHODS FOR AN ENHANCED GARAGE DOOR OPENER REMOTE CONTROL**
SYSTEME UND VERFAHREN ZUR ERWEITERTEN FERNSTEUERUNG EINES GARAGENTORÖFFNERS
SYSTÈMES ET PROCÉDÉS DE COMMANDE À DISTANCE D'UN DISPOSITIF D'OUVERTURE DE PORTE DE GARAGE AMÉLIORÉ

(30) Priority: 30.11.2016 US 201662427927 P
(43) Date of publication of application: 06.06.2018
(73) Proprietor: TTI (Macao Commercial Offshore) Limited, Macao (MO)
(72) Inventor: Huggins, Mark, Anderson, South Carolina 29621 (US); Preus, Michael, Piedmont, South Carolina 29673 (US); McNabb, William, Anderson, South Carolina 29621 (US)
(74) Representative: Stevenson-Hill, Jack Patrick

(56) References cited:
- WO-A2-2006/083551
- US-A1- 2013 328 663
- US-A1- 2015 302 735
- US-A1- 2016 258 202

## Description

### TECHNICAL FIELD

The present invention relates to a remote control device of a garage door opener system. For example, a remote control device of a garage door opener system responds to conditions detected in an environment of the garage door opener system through controlling secondary components of the remote control device and the garage door opener system.

According to its abstract, WO-A-2006/083551 describes an apparatus and methods for implementing a garage door monitoring system coupled to a garage door opener. The door monitoring system allow a user to actuate the door under control via a network connection. In at least one embodiment, the door monitoring system is controlled by a cell phone or networked appliance capable of transmitting information and data via a cellular telephone network. The door monitoring system provides the added advantage of allowing a remote user to view the areas or regions near to the door under control prior to actuating the door. At least one embodiment comprises a method to validate reception of the pictures or video clips of the areas or regions near to the door prior to enabling the system to actuate the door. In another embodiment a pass code is embedded into the pictures or video provided to the remote user.

According to its abstract, US-A-2015/302735 describes a system for installation in a vehicle and for controlling a remote device including a trainable transceiver, a camera, and a control circuit coupled to the trainable transceiver and the camera. The control circuit is configured to use the camera to identify the remote device by comparing information received via the camera to information stored in memory, and the control circuit is configured to automatically transmit an activation signal formatted to control the remote device in response to identifying the remote device.

According to its abstract, US-A-2016/258202 describes methods for replacing a first garage door controller with a second garage door controller can include electrically decoupling the first garage door controller from a first wire that is electrically coupled to the garage door opener. Methods can include electrically decoupling the first garage door controller from a second wire that is electrically coupled to the garage door opener. Methods can also include electrically coupling the second garage door controller to the first wire and electrically coupling the second garage door controller to the second wire. Methods can even include communicatively coupling the second garage door controller to an Internet router to thereby communicatively couple the second garage door controller to a wireless network.

According to its abstract, US-A-2013/328663 describes a universal system and method for controlling existing garage doors via existing garage door openers. The system includes a module operable both manually and automatically to control the existing garage door, Wifi communication circuitry to receive instructions wirelessly from a remote, circuitry for automatic and remote control of the garage door and circuitry for pushing garage door status information.

### SUMMARY

In some embodiments, a remote control device of a garage door opener system includes a user input configured to receive an input from a user, a wireless communication interface configured to communicate with a garage door opener, secondary components including a secondary sensor and a secondary actuatable component, and an electronic processor. The electronic processor is communicatively coupled via a communication bus to the secondary components, the user input, and the wireless communication interface. The electronic processor is further communicatively coupled to a memory storing instructions that when executed by the electronic processor cause the electronic processor to do the following. In response to the input at the user input, the electronic processor communicates a user input command to the garage door opener to operate a motor configured to drive a garage door. The instructions further cause the electronic processor to detect stimuli in a space associated with the remote control device based on sensory data output from the secondary sensor of the remote control device, determine a responsive action to the stimuli detected in the space associated with the remote control device, and control the secondary actuatable component and an accessory device of the garage door opener to perform the responsive action, wherein the accessory device is configured to selectively couple to a module port on the garage door opener.

In some embodiments, a method for secondary functions of a garage door opener remote control device comprises, in a garage door opener remote control device that includes a user input configured to receive an input from a user, a wireless communication interface configured to communicate with a garage door opener, and secondary components including a secondary sensor and a secondary actuatable component: in response to the input at the user input, communicating a user input command to the garage door opener to operate a motor configured to drive a garage door. The garage door opener remote control device further detects stimuli in a space associated with the remote control device based on sensory data output from the secondary sensor of the remote control device, determines a responsive action to the stimuli detected in the space associated with the remote control device, and controls a secondary actuatable component and an accessory device of the garage door opener to perform the responsive action, wherein the accessory device is configured to selectively couple to a module port on the garage door opener.

In some embodiments, a remote control device of a garage door opener system includes a user input configured to receive an input from a user, a wireless communication interface configured to communicate with a garage door opener, and an electronic processor communicatively coupled via a communication bus to the user input and the wireless communication interface, and a sensor. The electronic processor is further communicatively coupled to a memory storing instructions that when executed by the electronic processor cause the electronic processor to, in response to the input at the user input, communicate a user input command to the garage door opener to operate a motor configured to drive a garage door. The electronic processor further caused to respond to data received from the sensor, and transmit information based on the sensor data to the garage door opener via the wireless communication interface configured to communicate with the garage door opener for a user notification, and control an accessory device configured to selectively couple to a module port of the garage door opener to generate the user notification based on the information. The following paragraphs also form part of the present disclosure: A remote control device of a garage door opener system, the remote control device comprising:
a user input configured to receive an input from a user;
a wireless communication interface configured to communicate with a garage door opener;
secondary components including a secondary sensor and a secondary actuatable component;
an electronic processor communicatively coupled via a communication bus to the secondary components, the user input, and the wireless communication interface, the electronic processor further communicatively coupled to a memory storing instructions that when executed by the electronic processor cause the electronic processor to:
   responsive to the input at the user input, communicate a user input command to the garage door opener to operate a motor configured to drive a garage door,
   detect stimuli in a space associated with the remote control device based on sensory data output from the secondary sensor of the remote control device,
   determine a responsive action to the stimuli detected in the space associated with the remote control device, and
   control at least one selected from the group consisting of the secondary actuatable component and an accessory device of the garage door opener to perform the responsive action.

The secondary actuatable component of the remote control device may include the wireless communication interface.

The responsive action may include communicating information based on the detected stimuli via a wireless network to at least one selected from the group consisting of a remote electronic server and a wireless phone.

The secondary sensor may include a microphone.

The sensory data output from the microphone may include audio signals comprising a user voice command that indicates the responsive action.

The responsive action may include at least one selected from the group consisting of sending an alert to a wireless device of the user, activating the secondary actuatable component, and activating the accessory device.

The secondary actuatable component may include the wireless communication interface.

The responsive action may be one selected from the group consisting of sending a command to close the garage door, sending a command to open the garage door, and activating a garage door accessory that is controlled by the garage door opener.

The secondary actuatable component of the remote control device may include a second secondary sensor that is activated to generate a second sensory data output.

The electronic processor may further be configured to:
detect a second stimuli in the space associated with the remote control device based on the second sensory data output.

The electronic processor may further be configured to:
determine a second responsive action based on the second stimuli.

The secondary actuatable component of the remote control device may include a speaker.

The responsive action may include audibly communicating information via the speaker based on the detected stimuli in the space associated with the remote control device.

The audibly communicated information may be at least one selected from the group consisting of driving directions for parking a vehicle based on output from a parking sensor of the secondary sensor, object proximity alerts to a driver based on output from an external infrared proximity sensor of the secondary sensor, air quality alerts to a driver based on output from an environmental sensor of the secondary sensor, car speed based on output from an accelerometer of the secondary sensor, and an alert to awaken a driver based on images captured by a camera of the secondary sensor that captures images of a driver that are analyzed by software to detect whether the driver is falling asleep.

The secondary sensor may include a proximity sensor that senses when the remote control device is within or beyond a predetermined proximity of a location, and actuates an RF transceiver to instruct the garage door opener to close the garage door when the remote control device is beyond the predetermined proximity and the garage door is open, and open the garage door when the remote control device is within the predetermined proximity and the garage door is closed.

The remote control device may be attached to a vehicle.

The secondary sensor may include an accelerometer that detects motion of the vehicle.

The responsive action may include communicating, by an RF transceiver of the secondary actuatable component, an alert indicating the motion of the vehicle to a wireless device of the user via the garage door opener and a communication network.

A method for secondary functions of a garage door opener remote control device, the method comprising:
receiving an input at a user input of a remote control device;
responsive to the input, communicating, by an electronic processor of the remote control device, a user input command to a garage door opener via a wireless communication interface of the remote control device, the user input command providing a command to operate a motor configured to drive a garage door;
detecting stimuli in a space associated with the remote control device, by the electronic processor, based on sensory data output from a secondary sensor of the remote control device;
determining, by the electronic processor, a responsive action to the stimuli detected in the space associated with the remote control device; and
controlling, by the electronic processor, at least one selected from the group consisting of a secondary actuatable component of the remote control device and an accessory device of the garage door opener to perform the responsive action.

The secondary actuatable component of the remote control device may include the wireless communication interface.

The responsive action may include communicating information based on the detected stimuli via a wireless network to at least one selected from the group consisting of a remote electronic server device and a wireless phone.

The secondary sensor may include a microphone.

The sensory data output from the microphone may include audio signals comprising a user voice command that indicates the responsive action.

The responsive action may include at least one selected from the group consisting of sending an alert to a user wireless device, activating the secondary actuatable component, and activating the accessory device that is coupled to the garage door opener.

The secondary sensor may include a proximity sensor that senses when the remote control device is within or beyond a predetermined proximity of a location, and actuates an RF transceiver to instruct the garage door opener to close the garage door controlled by the garage door opener when the remote control device is beyond the predetermined proximity and the garage door is open, and open the garage door when the remote control device is within the predetermined proximity and the garage door is closed.

The secondary actuatable component may include a further wireless communication interface.

The responsive action may be one selected from the group consisting of sending a command to close the garage door, sending a command to open the garage door, and activating a garage door accessory that is controlled by the garage door opener.

The secondary actuatable component of the remote control device may include a speaker.

The responsive action may include audibly communicating information via the speaker based on the detected stimuli in the space associated with the remote control device.

The audibly communicated information may be at least one selected from the group consisting of driving directions for parking a vehicle based on output from a parking sensor of the secondary sensor, object proximity alerts to a driver based on output from an external infrared proximity sensor of the secondary sensor, air quality alerts to a driver based on output from an environmental sensor of the secondary sensor, car speed based on output from an accelerometer of the secondary sensor, and an alert to awaken a driver based on images captured by a camera of the secondary sensor that captures images of a driver that are analyzed by software to detect whether the driver is falling asleep.

The secondary actuatable component of the remote control device may include a second secondary sensor that is activated to generate a second sensory data output for detection of a second stimuli in the space associated with the remote control device.

The method may further comprise determining, by the electronic processor, a second responsive action based on the second stimuli.

The remote control device may be attached to a vehicle.

The secondary sensor may include an accelerometer that detects motion of the vehicle.

In response, an RF transceiver of the secondary actuatable component may communicate an alert indicating the motion of vehicle to a wireless device of a user via the garage door opener and a communication network.

A remote control device of a garage door opener system, the remote control device comprising:
a user input configured to receive an input from a user;
a wireless communication interface configured to communicate with a garage door opener; and
an electronic processor communicatively coupled via a communication bus to the user input, and the wireless communication interface, and a sensor;
the electronic processor further communicatively coupled to a memory storing instructions that when executed by the electronic processor cause the electronic processor to:
   responsive to the input at the user input, communicate a user input command to the garage door opener to operate a motor configured to drive a garage door,
   responsive to data received from the sensor, transmit information based on the sensor data to the garage door opener via the wireless communication interface for a user notification.

The sensor may be at least one selected from the group consisting of: a parking sensor, an external infrared proximity sensor, an environmental sensor, an accelerometer, a camera, and a microphone.

The garage door opener may control an accessory device of the garage door opener to generate the user notification based on the information.

The garage door opener may transmit the user notification based on the sensor data information to a user device via a communication network coupled to the garage door opener.

The user device may be at least one selected from the group consisting of a personal wireless communication device, a personal computing device, and a server.

Other features and aspects of the invention will become apparent by consideration of the following detailed description and accompanying drawings.

### BRIEF DESCRIPTION OF THE DRAWINGS

FIG. 1 is a view of a garage door opener system.
FIG. 2 is a view of a garage door opener of the garage door system in FIG. 1.
FIGS. 3A and 3B illustrate a block power diagram of the garage door opener of FIG. 2.
FIG. 4 is a block communication diagram of the garage door opener of FIG. 2.
FIG. 5 is a diagram of a garage door control system.
FIG. 6 is a diagram of a garage door opener remote control.
FIG. 7 is a flow chart that illustrates a method for controlling actuatable secondary components of a garage door opener remote control device in response to output of a secondary sensor of the garage door opener remote control device.
FIG. 8 is a flow chart that illustrates a method for wireless communication via secondary components of a garage door opener remote control device.
FIG. 9 is a flow chart that illustrates a method for communicating vehicle status to users via secondary components of a garage door opener remote control device.
FIGS. 10A and 10B illustrate the garage door opener remote control device of FIGS. 5-6.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

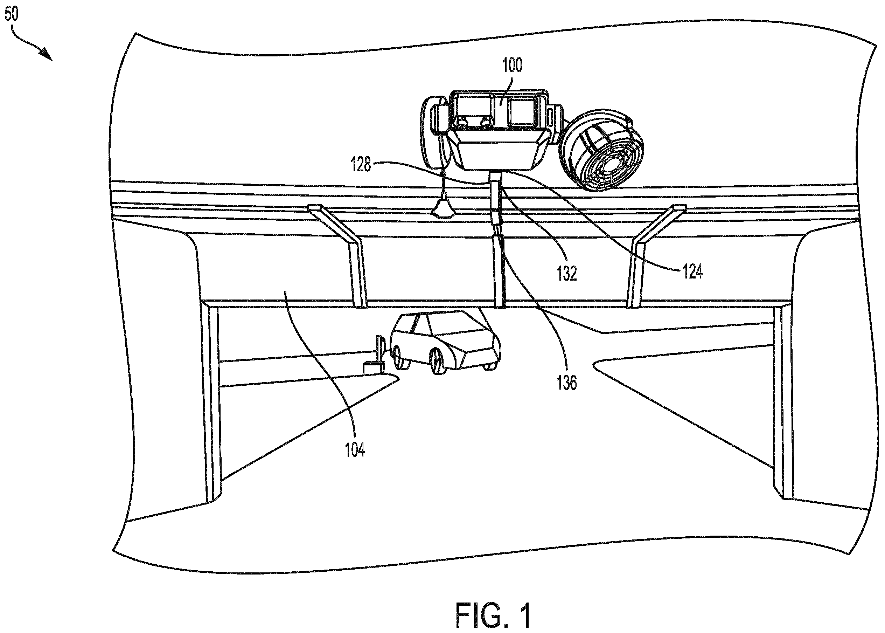

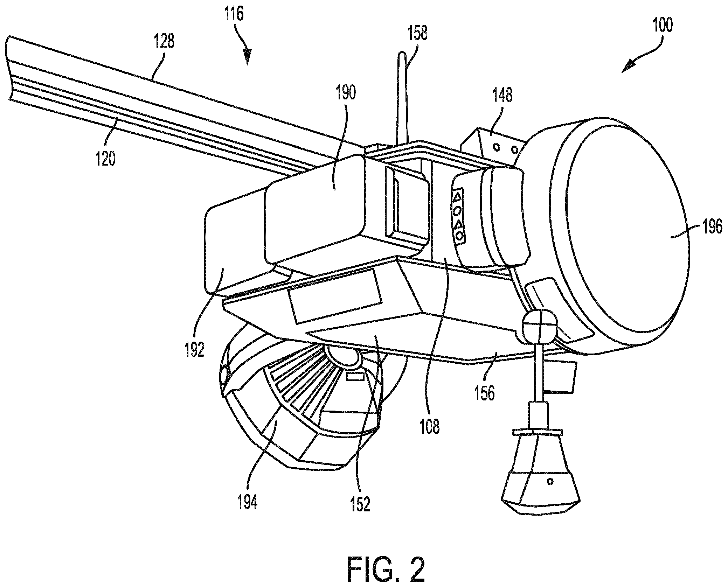

FIGS. 1-2 illustrate a garage door system 50 including a garage door opener 100 operatively coupled to a garage door 104. The garage door opener 100 includes a housing 108 supporting a motor that is operatively coupled to a drive mechanism 116. The drive mechanism 116 includes a transmission coupling the motor to a drive chain 120 having a shuttle 124 configured to be displaced along a rail assembly 128 upon actuation of the motor. The shuttle 124 may be selectively coupled to a trolley 132 that is slidable along the rail assembly 128 and coupled to the garage door 104 via an arm member.

The trolley 132 is releaseably coupled to the shuttle 124 such that the garage door system 50 is operable in a powered mode and a manual mode. In the powered mode, the trolley 132 is coupled to the shuttle 124 and the motor is selectively driven in response to actuation by a user (e.g., via a key pad or wireless remote in communication with the garage door opener 100). As the motor is driven, the drive chain 120 is driven by the motor along the rail assembly 128 to displace the shuttle 124 (and, therefore, the trolley 132), thereby opening or closing the garage door 104. In the manual mode, the trolley 132 is decoupled from the shuttle 124 such that a user may manually operate the garage door 104 to open or close without resistance from the motor. The trolley 132 may be decoupled, for example, when a user applies a force to a release cord 136 to disengage the trolley 132 from the shuttle 124. In some embodiments, other drive systems are included such that, for example, the drive mechanism 116 includes a transmission coupling the motor to a drive belt that is operatively coupled to the garage door 104 via a rail and carriage assembly.

The housing 108 is coupled to the rail assembly 128 and a surface above the garage door (e.g., a garage ceiling or support beam) by, for example, a support bracket 148. The garage door opener further includes a light unit 152 including a light (e.g., one or more light emitting diodes (LEDs)) enclosed by a transparent cover or lens 156), which provides light to the garage. The light unit 152 may either be selectively actuated by a user or automatically powered upon actuation of the garage door opener 100. In one example, the light unit 152 may be configured to remain powered for a predetermined amount of time after actuation of the garage door opener 100.

The garage door opener 100 further includes an antenna 158 enabling the garage door opener 100 to communicate wirelessly with other devices, such as a smart phone or network device (e.g., a router, hub, or modem), as described in further detail below. The garage door opener 100 is also configured to receive, control, and/or monitor a variety of accessory devices, such as a backup battery unit 190, a speaker 192, a fan 194, an extension cord reel 196, among others.

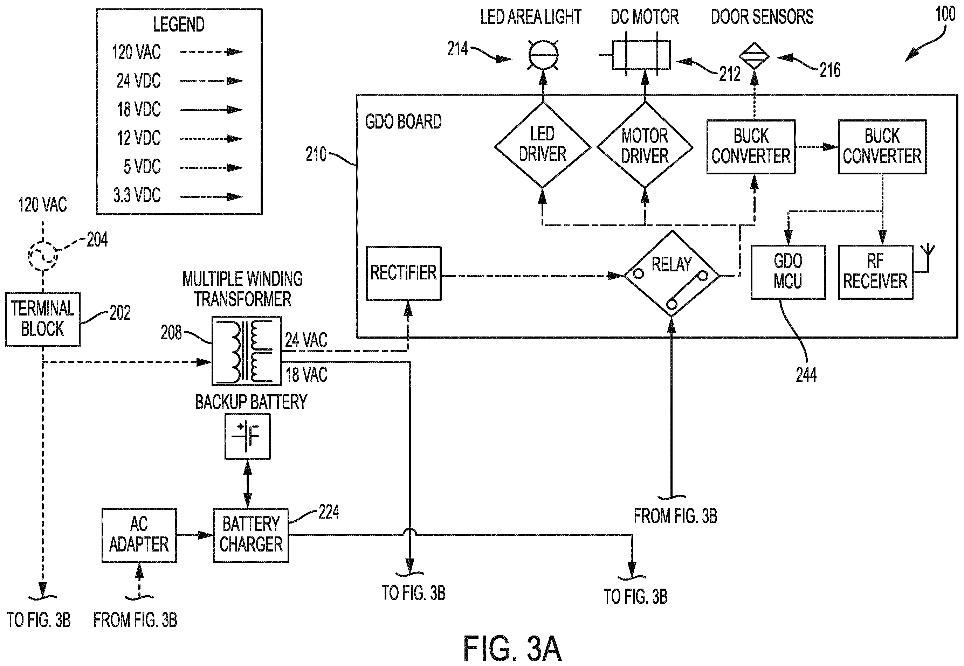

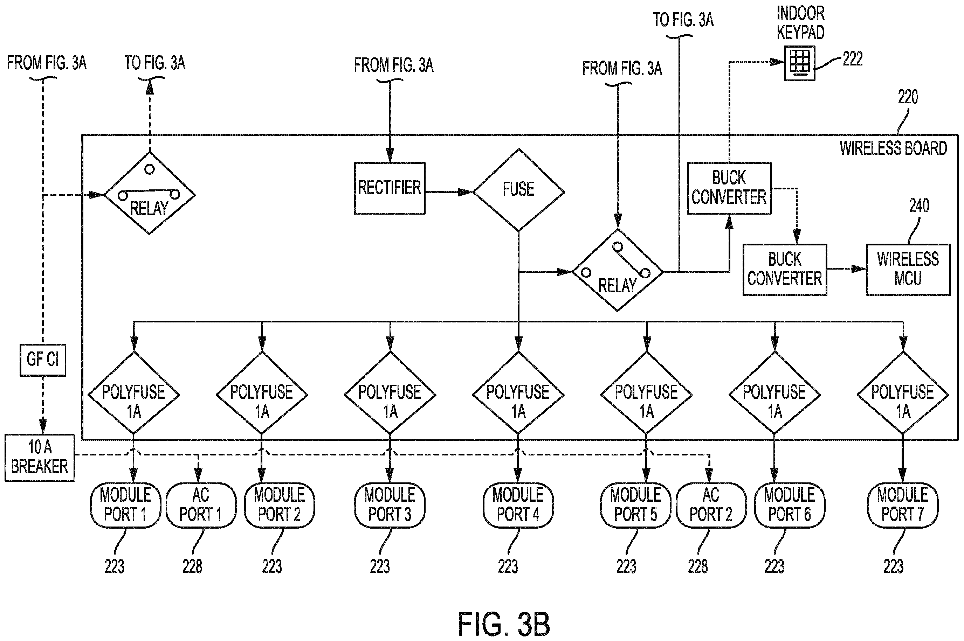

FIGS. 3A-B illustrates a block power diagram of the garage door opener 100. The garage door opener 100 includes a terminal block 202 configured to receive power from an external power source 204, such as a standard 120 VAC power outlet. The terminal block 202 directs power, via a transformer 208, to a garage door opener (GDO) board 210 for supply to components thereof as well as a motor 212 (used to drive the drive mechanism 116, as described above), LEDs 214 (of the light unit 152), and garage door sensors 216. The terminal block 202 further directs power via the transformer 208 to a wireless board 220 and components thereof, as well as a wired keypad 222 and module ports 223. The terminal block 202 also directs power to a battery charger 224 and AC ports 228. The module ports 223 are configured to receive various accessory devices, such as a speaker, a fan, an extension cord reel, a parking assist laser, an environmental sensor, a flashlight, and a security camera. One or more of the accessory devices are selectively attachable to and removable from the garage door opener 100, and may be monitored and controlled by the garage door opener 100.

The wireless board 220 includes a wireless microcontroller 240, among other components. The GDO board 210 includes, among other components, a garage door opener (GDO) microcontroller 244 and a radio frequency (RF) transceiver 246.

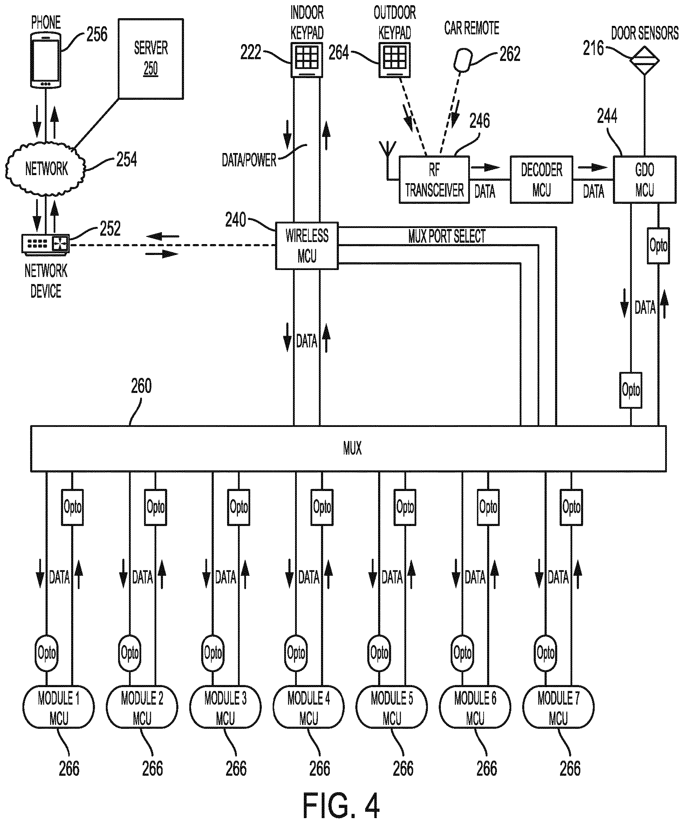

FIG. 4 illustrates a block communication diagram of the garage door opener 100. The wireless microcontroller 240 is coupled to the antenna 158 and enables wireless communication with a server 250 via a network device 252 and network 254, as well as with a smart phone 256 (and other similar external devices, such as tablets and laptops). The network device 252 may be, for example, one or more of a router, hub, or modem. The network 254 may be, for example, the Internet, a local area network (LAN), another wide area network (WAN) or a combination thereof. The wireless microcontroller 240 may include, for example, a Wi-Fi radio including hardware, software, or a combination thereof enabling wireless communications according to the Wi-Fi protocol. In other embodiments, the wireless microcontroller 240 is configured to communicate with the server 250 via the network device 252 and network 254 using other wireless communication protocols. The network 254 may include various wired and wireless connections to communicatively couple the garage door opener 100 to the server 250. As illustrated, the wireless microcontroller 240 also includes wired communication capabilities for communicating with the GDO microcontroller 244 via the multiplexor 260. In some embodiments, the wireless microcontroller 240 and the GDO microcontroller 244 are directly coupled for communication. In some embodiments, the wireless microcontroller 240 and the GDO microcontroller 244 are combined into a single controller.

The RF transceiver 246 is wirelessly coupled to various user actuation devices, including one or more wireless remotes 262 and wireless keypads 264, to receive and provide to the GDO microcontroller 244 user actuation commands (e.g., to open and close the garage door 104). The smart phone 256 may also receive user input and, in response, provide (directly or via the network 254) to the wireless microcontroller 240 user actuation commands for the garage door opener 100 or commands to control one or more of the accessory devices. The multiplexor 260 enables communication between and among the wireless microcontroller 240, the GDO microcontroller 244, and the accessory microcontrollers 266 (of the accessory devices previously noted).

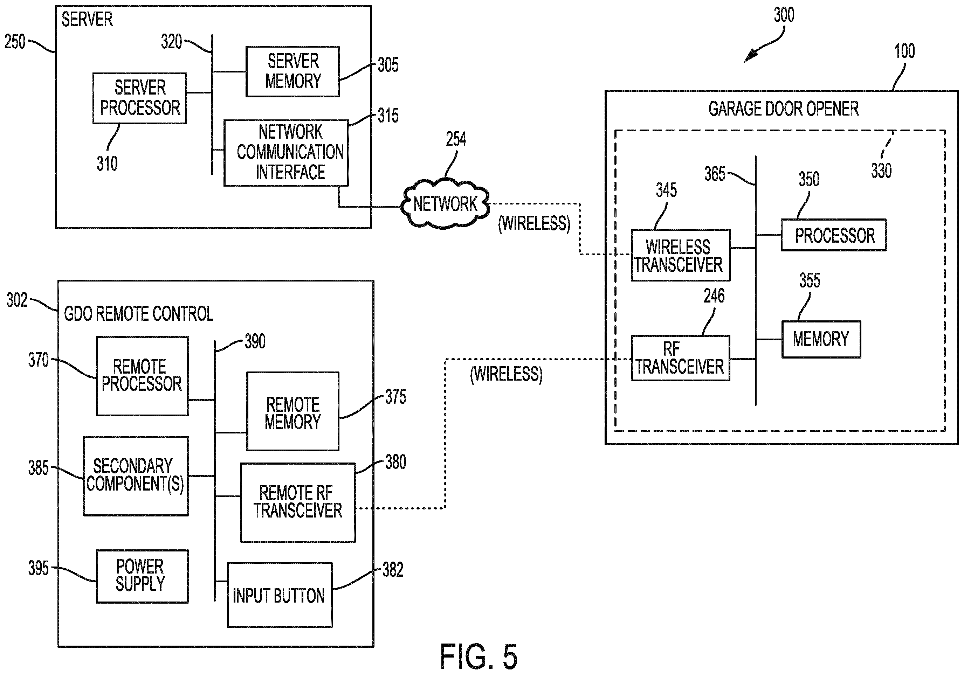

FIG. 5 illustrates a diagram of a garage door control system 300. The garage door control system 300 includes the garage door opener 100, server 250, network 254 and a garage door opener (GDO) remote control 302. For ease of illustration and description, the network device 252 is considered part of the network 254 in FIG. 5 and not separately illustrated. Also, not shown in FIG. 5 is the smart phone 256 (or other external device) that communicates with the garage door opener 100 via the network 254.

The server 250 includes a server memory 305, a server processor (e.g., an electronic server processor) 310, and a network communication interface 315 coupled by a communication bus 320.

The garage door opener 100 includes a wireless controller 330. Only select components of the wireless controller 330 are illustrated, including a wireless transceiver 345, a processor (e.g., an electronic processor) 350, a memory 355, and the radio frequency (RF) transceiver 246. The wireless transceiver 345 may be part of the wireless microcontroller 240 (FIG. 4). The processor 350 and memory 355 may be part of the GDO microcontroller 244 (FIG. 4). The processor 350, memory 355, RF transceiver 246 and wireless transceiver 345 are in communication via a communication bus 365, which may include the multiplexor 260 (FIG. 4).

The GDO remote control 302 includes a remote control processor (herein remote processor) 370, a remote control memory (herein remote memory) 375, a remote control RF transceiver (herein remote RF transceiver) 380, an input button 382, and one or more secondary components 385 coupled by a communication bus 390. The GDO remote control 302 further includes a power supply 395. The power supply 395 provides power to the components of the GDO remote control 302, for example, based on solar power, 12V connection to car battery, one-use batteries, rechargeable batteries, or power tool battery pack (e.g., 18V Lithium Ion).

In some embodiments, the GDO remote control 302 is positioned within a vehicle (e.g., the vehicle illustrated in FIG. 1). For example, the GDO remote control 302 may include a housing with a clip configured to attach to a sun visor of the vehicle or with hardware to mount to a dash of the vehicle.

The GDO remote control 302 is an example of the wireless remote 262 (FIG. 4) noted above and, accordingly, is configured to transmit user actuation commands to the RF transceiver 246 of the garage door opener 100 (e.g., to open and close the garage door 104). For example, the remote processor 370 may receive from the input button 382, which may be a hard key (e.g., pushbutton switch) or soft key (e.g., on a graphical user interface presented on a display of the GDO remote control 302), an indication of a user actuation of the input button 382. In turn, the remote processor 370 may transmit a user actuation command via the remote RF transceiver 380 to the RF transceiver 246 of the garage door opener 100. The user actuation command may include a fixed or rolling code, which the processor 350 of the garage door opener 100 compares to an expected one or more codes to confirm the authenticity of the command. In response to confirmation, the garage door opener 100 drives motor 212 to open or close the garage door.

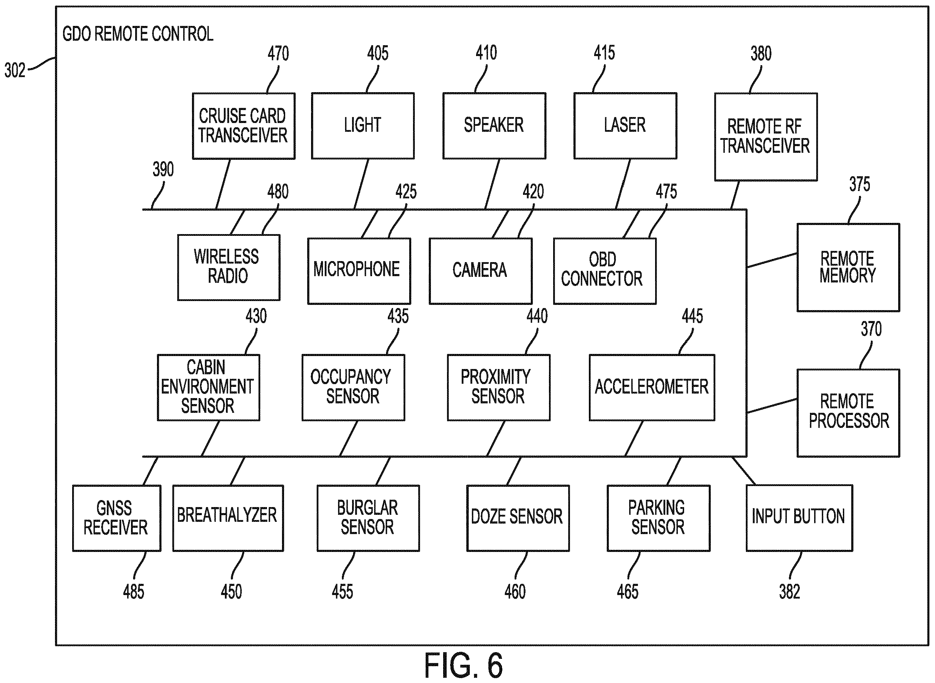

FIG. 6 illustrates the GDO remote control 302 in further detail and, in particular, with example elements making up the one or more secondary components 385. The one or more secondary components 385 may include one or more of a light 405, a speaker 410, a laser 415, a camera 420, a microphone 425, a cabin environment sensor 430 (e.g., one or more of an oxygen sensor, carbon monoxide sensor, temperature sensor, humidity sensor, and ultraviolet (UV) sensor), an occupancy sensor 435, a proximity sensor 440, an accelerometer 445, a breathalyzer 450, a burglar sensor 455, a doze sensor 460, a parking sensor 465, a cruise card transceiver 470, an OBD connector 475, a wireless radio 480 (e.g., one or more of a Wi-Fi™ radio, Bluetooth™ radio, Zigbee™, a cellular radio, or another wireless radio), or a global navigation satellite system (GNSS) receiver 485. While these elements are described in the singular, one or more may be present in embodiments of the GDO remote control 302 (e.g., two or more microphones), which may work together or independently for various functions. Similarly, in some embodiments of the GDO remote control 302, one or more of the secondary components 385 illustrated in FIG. 6 are not included in the GDO remote control 302.

The remote processor 370 is communicatively coupled via the communication bus 390 to the secondary components 385 to receive data from the secondary components 385, to control the secondary component 385, or both. The remote processor 370 may further communicate (e.g., via the remote RF transceiver 380 or the wireless radio 480) with the garage door opener 100, the smart phone 256, and/or the server 250 to implement various functions described below. The GDO remote control 302 is configured to perform one or more secondary functions using one or more of the secondary components 385. For example, a secondary function is a function other than, or in addition to, instructing the garage door opener 100 to open or close. Some embodiments with secondary functions include the following examples.

The microphone 425 may be utilized for implementing voice commands for the GDO remote control 302. In one embodiment, the microphone 425 is employed to detect audio and convey audio signals to the remote processor 370. The remote processor 370 analyzes the audio signals to detect commands from a user. For example, the remote processor 370 is configured to identify a voice command by comparing received audio signals to stored audio commands and, based on the comparison, determine a matching stored audio command. The remote processor 370 then takes steps to carry out the identified voice command, such as sending instructions to the garage door opener 100. In these examples, the processor 350 is configured to receive and execute instructions transmitted by the remote processor 370 in response to identified voice commands. As such, the microphone 425 is employed to implement voice commands to open and close the garage door 104. In some embodiments, the microphone 425 may be employed to implement voice commands for turning garage door modules on or off. The modules may be accessories attached to the garage door opener 100 at one of the module ports 223. The modules may include, for example, a speaker, a fan, an extension cord reel, a parking assist laser, an environmental sensor, a flashlight, and a security camera. To turn a module on or off, the processor 350 is configured to, for example, control an electronic switch coupled between a power supply (e.g., the transformer 208) and the module to enable and disable the flow of power.

In some embodiments, the microphone 425 may be utilized for implementing voice commands for turning lights on or off. For example, voice commands may be received via the microphone 425 for turning light 405 or a light on the garage door opener 100 on or off, and corresponding instructions may be transmitted to the processor 350 to identify and control the applicable light similar to those described above.

In some embodiments, the microphone 425 may be employed to implement voice commands to set up time-based reminders (e.g., the reminders may be stored in the remote memory 375). The remote processor 370 compares a current time to the stored reminders to determine whether to convey the reminder. When the time for a particular reminder is reached, the remote processor 370 conveys the time-based reminder via the speaker 410 (e.g., "today is your wife's birthday).

In some embodiments, the speaker 410 is employed to indicate information to a user. For example, the speaker 410 may be employed to indicate driving directions (e.g., "left, right, stop") when a user is parking a vehicle in the garage. The driving directions may be based on input from the parking sensor 465.

In some embodiments, the speaker 410 may be employed to indicate warnings such as "stop moving, the door is open," "check tire pressure," and "turn off active modules." In this regard, the speaker 410 may be activated by the remote processor 370 based on input from other components of the secondary components 385 and/or the garage door opener 100.

In some embodiments, the speaker 410 may be employed to indicate traffic alerts. The traffic alerts may be received by the remote processor 370 via a connection to a third party server application, for example, Google® traffic or Waze® traffic maps. The connection to the third party server application may occur via the wireless radio 480. The traffic alerts may alert a user when there is new traffic on the user's "normal" or current travel route, while the user is using navigational services. The navigational services may be accessed by the GDO remote control 302 via software and databases incorporated into the GDO remote control 302, or may be accessible by the GDO remote control 302 via a network. For example, the navigational services may reside on or be accessible via the server 250 or smart phone 256.

In some embodiments, the occupancy sensor 435 may comprise a passive infrared sensor (PIR) and/or ultrasonic sensors for detecting whether a child or animal has been left in a car. The PIR may also detect when a child is playing and is stuck in a car. For example, the PIR and ultrasonic sensors may output a binary signal indicative of whether motion is detected. Output from the PIR and/or ultrasonic sensor may be received by the remote processor 370, and the remote processor 370 may communicate a notification to a user via wireless communication. For example, the notification may be sent via the remote RF transceiver 380 or the wireless radio 480. The notification may be sent via the garage door opener 100 or sent directly to the smart phone 256, the server 250, or a home network to communicate the notification to a user.

In some embodiments, the occupancy sensor 435 may be utilized to turn on the microphone 425, for example, on a schedule, or when the car doors close. When the microphone is on and it detects noise above a threshold, the remote processor 370 can alert the garage door opener 100 to send a notification to the user, for example, via the smart phone 256.

In some embodiments, the GDO remote control 302 may utilize output from the proximity sensor 440 to trigger the remote processor 370 when it gets close to home, to transmit a command to the garage door opener 100 to open the garage door. The GDO remote control 302 determines the current state of the garage door (e.g., based on communication sent via the RF transceiver 246 that indicates the garage door and open or closed) and opens the door if it is in a closed position

In some embodiments, the remote processor 370 of the GDO remote control 302 is triggered based on proximity sensor 440 output when it detects that it is beyond a predetermined proximity relative to home, to transmit a command to close to the garage door with the garage door opener 100. The GDO remote control 302 determines the current state of the garage door (e.g., based on communication from the RF transceiver 246) and closes the garage door if it is in the open position.

In some embodiments, by employing the proximity sensor 440, the GDO remote control 302 can determine when there is another car located in a garage already. Alternatively, the GDO remote control 302 can determine that another car is located in a garage based on communication received from the RF transceiver 246 of the garage door opener 100, when the garage door opener 100 detects the other car utilizing sensors on the garage door opener 100. The remote processor 370 may notify a user that the other car is detected and may notify the user via the speaker 410.

In some embodiments, the accelerometer 445 may be employed by the GDO remote control 302 to determine if a car in which the GDO remote control 302 is located is moving. The remote processor 370 may notify a user that the car is moving via wireless communication. For example, the notification may be sent via the remote RF transceiver 380 or the wireless radio 480. The notification may be sent via the garage door opener 100 or sent directly to the smart phone 256, the server 250, or a home network to communicate the notification to a user. Alternatively, the remote processor 370 may communicate the notification via the speaker 410 to alert a person within the vehicle.

In some embodiments, the accelerometer 445 may be employed by the GDO remote control 302 to detect speeds and movement of the car in which the GDO remote control 302 is located. The remote processor 370 may notify a user that the car is moving or may communicate the speed of the cars movement via the speaker 410 when the user is in the vehicle, or via wireless communication to a remote user. For example, the movement and/or speed notification may be sent via the remote RF transceiver 380 or the wireless radio 480. The notification may be sent via the garage door opener 100 or sent directly to the smart phone 256, the server 250, or a home network to communicate the notification to a user.

In some embodiments, the accelerometer 445 may be employed by the GDO remote control 302 to log data as the car is in use or on the road. Once the GDO remote control 302 is located within wireless range of the GDO 100 or a communication network, the data may be uploaded to the cloud (for example, to computing resources accessible via the Internet), through, for example, a user's home network, or through the garage door opener 100 and the network 254.

In some embodiments, based on output of the accelerometer 445, the GDO remote control 302 is operable to send alerts, such as, "your vehicle has left the garage." In this regard, the GDO remote control 302 communicates to the GDO 100 when motion of the vehicle is detected after having previously determined a parked condition. The garage door opener 100 may then send a notification to the user's smart phone 256 via the network 254.

In some embodiments the parking sensor 465, which may be a proximity sensor, may be employed in a secondary function to provide parking directions to a driver via the speaker 410. For example, the proximity sensor 465 can detect external markings placed on the ground indicating a predetermined parking position in the garage (e.g., via optical detection or other wireless detection). Alternatively the proximity sensor 465 may include external sensors (e.g., infrared distance sensors) on the vehicle that detect proximity to objects (e.g., walls, other items in a garage).

One or more environmental sensors 430 may be employed for performing secondary functions. Environmental sensors 430 may include, for example, oxygen sensors, carbon monoxide sensors, temperature sensors, humidity sensors and UV sensors. In some embodiments, an oxygen sensor measures the quality of air in a car to see if a user should change out a cabin air filter. The output of the oxygen sensor may be utilized to convey a quality of air indication via speaker 410. Similarly, output from a carbon monoxide sensor may be utilized to alert a user, via speaker 410, when an excessive CO level is detected. In some embodiments, temperature sensors, humidity sensors, and/or UV sensors are utilized to alert users, via speaker 410, when levels are detected outside of a normal range.

In some embodiments, the video camera 420 may record video in and/or outside of the vehicle cabin, store the video in memory for later retrieval and/or export to the smart phone 256 via the garage door opener 100.

In some embodiments, the auxiliary light 405 may be utilized to provide ambient light, for example, to search for items in a vehicle. The auxiliary light 405 may also be utilized as a flash of light, for example, for signaling reminders or notifications to a user.

In some embodiments, the wireless radio 480 may provide a local wireless connection (e.g., Bluetooth) to connect to the GDO remote control 302 to the phone 256. In one example, GDO remote control 302 may be utilized as a speaker phone for the phone 256, using the microphone 425 and the speaker 410. (communication device)

In some embodiments the wireless radio 480 comprises a cellular radio and is utilized to provide cellular communications for the GDO remote control 302 to enable the GDO remote control 302 to connect to the network 254, the server 250, and/or the garage door opener 100, for example, when the GDO remote control 302 is on the road, without having to go through the smart phone 256 (or other bridge connections).

In some embodiments the wireless radio 480 comprises a Wi-Fi transceiver to provide Wi-Fi connections that enable the GDO remote control 302 to connect directly to a home network.

In some embodiments, the GDO remote control 302 provides the wireless radio 480 and an antenna for Zigbee, Z-wave, or other public or proprietary wireless communication protocol-based communications to connect, control, or monitor the status of other Home Connected products.

In some embodiments, the remote processor 370 employ the GNSS receiver 485 for pinpoint tracking the location of the GDO remote control 302, which may also locate the vehicle in which the GDO remote control 302 is located.

In some embodiments, the remote processor 370 may employ the laser 415 to project messages onto a target area, such as a wall, upon entering the garage. For example, the laser 415 may project messages to display signals of warning, such as an oil low warning based on oil level status detected via a connection to the vehicle. Parking assistance messages may also be projected by the laser 415, for example, "3 ft," "2 ft," "1 ft," "stop."

In some embodiments, the remote processor 370 may employ the burglar sensor 455, which may be tied into a vehicle alarm system, to inform the remote processor 370 when a break-in is detected by the vehicle alarm system. The remote processor 370 may provide a notification to a user of the smart phone 256 of the break-in, for example, via the garage door opener 100 and the network 254, or via the wireless radio 480)

In some embodiments, the breathalyzer 450 may be employed by the remote processor 370 for checking blood-alcohol content (BAC) of vehicle occupants or a driver, for example. The remote processor 370 may receive results from the breathalyzer 450 and communicate the results to a user via the speaker 410 or via a display of the GDO remote control 302. In some embodiments, the remote processor 370 may notify a remote user that a breathalyzer 450 test failed. For example, the notification may be sent via the remote RF transceiver 380 or the wireless radio 480. The notification may be sent via the garage door opener 100 or sent directly to the smart phone 256, the server 250, or a home network to communicate the breathalyzer test notification to a user.

In some embodiments, the doze sensor 460 may be employed by the remote processor 370 to determine whether a driver is falling asleep while driving. The remote processor 370 may, in turn, cause the speaker 410 or the light 405 to generate an alert or notification to awaken the driver. For example, the doze sensor may include a camera and associated software that analyzes captured image data to track eye movement, blinking patterns, or both to determine whether a driver is falling asleep.

In some embodiments, the on-board diagnostics (OBD) connector 475 may be employed to connect the GDO remote control 302 to an OBD connector within a vehicle, to decode engine "trouble codes" and alert the user of the engine trouble, for example, via the speaker 410.

In some embodiments, the cruise card transceiver 470 may be employed to enable a "cruise card" or "EZ- Pass" function integration with the GDO remote control 302. A user's toll pass unique identification code is stored for access by the cruise card transceiver 470 so that the user does not need a separate transceiver for electronic toll collection in a vehicle.

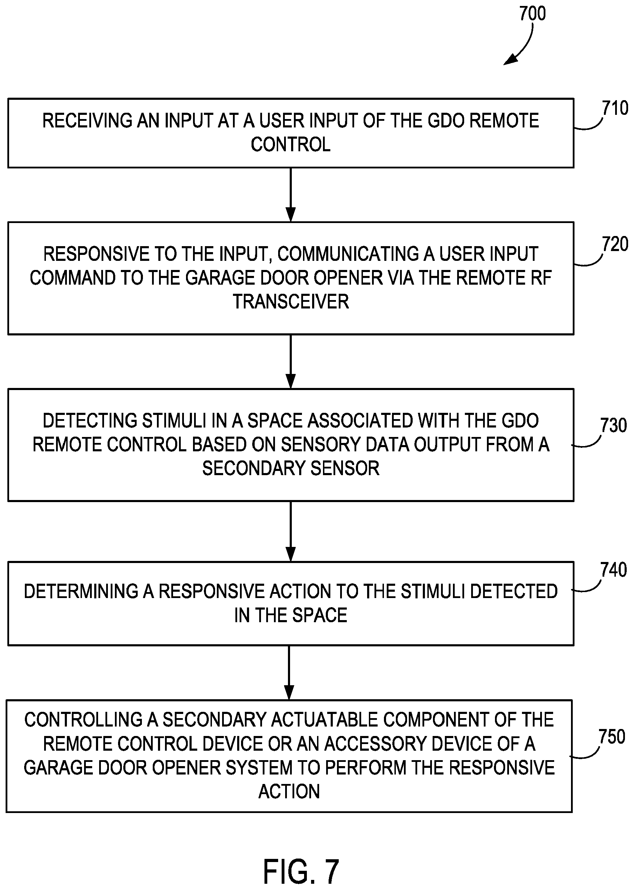

In some embodiments, the methods described below with respect to FIGS. 7, 8, and 9 are used to implement one or more of the secondary functions described above.

FIG. 7 is a flow chart that illustrates a method 700 for secondary functions of a GDO remote control device based on output of a secondary sensor of the GDO remote control device. Although explained with respect to the system 500, the method 700 is also be applicable to other systems in some embodiments. In step 710, an input is received at a user input of the GDO remote control 302 (i.e., a GDO remote control device). For example, in response to user depression of the input button 382, an input signal is sent to, and received at, the remote processor 370. In step 720, responsive to the input, the remote processor 370 communicates a user input command to the garage door opener 100 via the remote RF transceiver 380 (also referred to as a wireless communication interface). As described above, the user input command provides a command to operate the motor 212 that drives the garage door 104. The command may further include a code that is used by the processor 350 of the garage door opener 100 to confirm authenticity of the command.

In step 730, the remote processor 370 detects stimuli in a space associated with the GDO remote control 302 based on sensory data output from a secondary sensor of the GDO remote control 302. The secondary sensor includes one of the secondary components 385 of the GDO remote control 302, which provides sensory data to the remote processor 370. For example, the secondary sensor is one or more of the microphone 425, the camera 420, the accelerometer 445, the proximity sensor 440, the occupancy sensor 435, the cabin environment sensor 430, the GNSS receiver 485, the breathalyzer 450, the burglar sensor 455, the doze sensor 460, and the parking sensor 465. The detected stimuli and form of the sensory data provided by the secondary sensor depends on the type of the secondary sensor. For example, the microphone detects and outputs audio data (whether analog or digital), the camera detects and outputs video or image data, the accelerometer 445 detects motion and outputs motion data (e.g., along one or multiple axes), the proximity sensor 440 detects distance and outputs distance data, the occupancy sensor 435 detects the presence or absence of an occupant and outputs data indicative of the presence or absence of the occupant, the cabin environment sensor 430 detects and outputs environmental data (e.g., air quality or sound level) indicative of the environment of a vehicle in which the GDO remote control 302 may be, the GNSS receiver 485 detects a location of the GDO remote control 302 and outputs corresponding location data, the breathalyzer 450 detects blood alcohol content and outputs blood alcohol content data, the burglar sensor 455 detects presence of an individual based on motion or heat and outputs a signal indicative of the presence of a detected individual, the doze sensor 460 detects a driver's alertness and outputs a alertness data indicative of whether a driver is alert, asleep, or a level in-between, and the parking sensor 465 detects a vehicle's location relative to obstacles or a desired parking location and outputs corresponding location data. The space considered associated with the GDO remote control 302 may vary depending on the particular type of secondary sensor. For example, the space associated with the GDO remote control in terms of the occupancy sensor 435 may include the cabin of a vehicle having the GDO remote control 302, while the space associated with the GDO remote control in terms of the breathalyzer 450 may include an area within 12 inches of the GDO remote control 302. In some embodiments, the space associated with the GDO remote control 302 includes the sensing range of the secondary sensor or a subset thereof.

In step 740, the remote processor 370 determines a responsive action to the stimuli detected in the space associated with the GDO remote control 302. For example, the remote processor 370 uses the stimuli as an input to a lookup table of the remote memory 375 that associates stimuli with responsive actions. In another example, the remote processor compares the stimuli to one or more thresholds stored in the remote memory 375 to determine whether a particular threshold is exceeded, and the remote memory 375 maps particular thresholds to particular responsive actions. Accordingly, in response to detecting a particular threshold is exceeded, the remote processor 370 identifies from the remote memory 375 the corresponding responsive action mapped to the threshold.

In step 750, the remote processor 370 controls one or more from the group of the secondary components 385 that are actuatable (a secondary actuatable component) and the accessory devices of the garage door opener 100 to perform the responsive action. For example, in the case of controlling one of the secondary components 385 to perform the responsive action, the remote processor 370 sends a command via the bus 390 to the particular component. The secondary component 385, in response, executes the command. For example, the secondary component 385 may include one or more of the light 405, the speaker 410, the laser 415, the wireless radio 480, the microphone 425, the camera 420, the OBD connector 475, the accelerometer 445, the proximity sensor 440, the occupancy sensor 435, the cabin environment sensor 430, the GNSS receiver 485, the breathalyzer 450, the burglar sensor 455, the doze sensor 460, and the parking sensor 465. The command (to implement the responsive action) may be an activation command or deactivation comment (e.g., to activate or deactivate the secondary component 385) or may be a more particular command (e.g., to convey a particular audio message via the speaker 410).

In the case of controlling one of the accessory devices of the garage door opener 100, such as a speaker, a fan, an extension cord reel, a parking assist laser, an environmental sensor, a flashlight, and a security camera, the remote processor 370 transmits the command via the remote RF receiver 380 to the RF transceiver 246 or the wireless radio 480 (e.g., over the network 254) to the wireless transceiver 345. The command is then provided to the accessory device, either via the bus 365 directly or by way of the processor 350 as an intermediary. The accessory device, in response, executes the command. For example, the command (to implement the responsive action) may be an activation command or deactivation comment (e.g., to activate or deactivate the accessory device) or may be a more particular command (e.g., to convey a particular audio message via the speaker, set a fan to a particular speed).

In one example, the actuatable secondary component of the remote control device includes the remote RF receiver 380 or the wireless radio 480 (also referred to as a wireless communication interface). The responsive action may then includes communicating information based on the detected stimuli via a wireless network (e.g., the RF link between the remote RF receiver 380 and the RF transceiver 246 or the network 254) to the remote electronic server 250, the smart phone 256, or both. In another example, the responsive action is one or more of sending a wireless command to the garage door opener 100 to close the garage door, to open the garage door, and to activate the accessory device.

In another example, the stimuli detected in step 730 is a voice command, the secondary sensor is the microphone 425, and the responsive action in step 750 corresponds to the instruction provided in the voice command received. The sensory data output from the microphone 425 includes audio signals including the voice command. The responsive action includes one or more of sending an alert to a wireless device of the user (e.g., the smart phone 256), activating the secondary actuatable component, and activating the accessory device. In other words, the voice commands may take various forms and implement various functions, as discussed above with respect to the microphone 425. For example, a voice command to "turn on fan accessory" detected in step 730 causes the remote processor 370 to send a wireless command to the garage door opener 100 in step 750 that controls the fan accessory device coupled to the garage door opener 100 to turn on. The alert may be sent via a wireless network (e.g., the RF link between the remote RF receiver 380 and the RF transceiver 246 or the network 254) to the smart phone 256.

In another example, the secondary actuatable component of the remote control device in the method 700 includes the speaker 410 and the responsive action includes audibly communicating information via the speaker 410 based on the detected stimuli in the space associated with the GDO remote control 302. The audibly communicated information is one or more of driving directions for parking a vehicle based on output from the parking sensor 465, object proximity alerts to a driver based on output from the proximity sensor 440, air quality alerts to a driver based on output from the environmental sensor 430, car speed based on output from the accelerometer 445, and an alert to awaken a driver based on images of a driver, captured by a camera of the doze sensor 460, that are analyzed by software of the doze sensor 460 to detect whether the driver is falling asleep.

In another example, the secondary actuatable component of the remote control device in the method 700 is another sensor of the secondary components 385 that is activated to generate a second sensory data output. This other sensor may be, for example, one or more of the microphone 425, the camera 420, the accelerometer 445, the proximity sensor 440, the occupancy sensor 435, the cabin environment sensor 430, the GNSS receiver 485, the breathalyzer 450, the burglar sensor 455, the doze sensor 460, and the parking sensor 465. However, this other sensor is selected to be of a different type than the sensor of step 730. The second sensory data output is received by the remote processor 370 to detect a second stimuli in the space associated with the remote control device. The remote processor 370, in turn, determines a second responsive action based on the second stimuli.

In another example, the secondary sensor of step 730 includes a proximity sensor that senses when the GDO remote control 302 is within or beyond a predetermined proximity of a location, such as the garage in which the garage door opener 100 resides, the home associated with the garage, or the particular location of the garage door opener 100. In addition to or separate from the responsive action in step 750, the remote processor 570 actuates the RF transceiver 380 to instruct the garage door opener 100 to close the garage door when the GDO remote control 302 is beyond the predetermined proximity and the garage door is open, and open the garage door when the GDO remote control 302 is within the predetermined proximity and the garage door is closed. To determine whether the GDO remote 302 is within or beyond the predetermined proximity, the remote processor 570 determines a distance value from the proximity sensor 440 and compares the distance value to the predetermined proximity, which may be in the form of a distance threshold. As one example, the proximity sensor 440 indicates the distance value by calculating a distance from the garage door opener 100 using a determined strength of a signal received by the remote RF transceiver 380 from the garage door opener 100. The strength of signal may be proportional to the distance and thus, with a calculation or lookup table, the strength of signal may be converted to a distance.

In another example, the GDO remote control 302 is attached to a vehicle and the secondary sensor in step 730 includes the accelerometer 445 that detects motion of the vehicle. The responsive action in step 750 includes controlling the RF transceiver 380 to communicate an alert indicating the motion of the vehicle to a wireless device of the user, such as the smart phone 256, via the garage door opener 100 and the network 254.

In another example, the GDO remote control 302 may be attached within the cabin of a vehicle. The cabin environment sensor 430 includes a carbon monoxide detector that detects an excessive level of carbon monoxide within the vehicle, and transmits carbon monoxide warning notification to the remote processor 370. In response, the remote processor 370 may activate the speaker 410 to broadcast an audible warning of the level of carbon monoxide in the cabin. Alternatively, the GDO remote control 302 may transmit the carbon monoxide warning notification to the garage door opener 100, which may actuate an accessory device coupled via one of the module ports 223, such as a blinking light and/or an audible alarm that indicates a high level of carbon monoxide in the vicinity.

In another example, the GDO remote control 302 is located within the cabin of a vehicle and the secondary sensor in step 730 includes the occupancy sensor 435 that detects occupancy within the cabin. The responsive action in step 750 includes controlling the RF transceiver 380 to communicate an alert indicating motion within the vehicle to a wireless device of the user, such as the smart phone 256, via the garage door opener 100 and the network 254. In some embodiments, the responsive action is further conditioned on the remote processor 370 determining that the vehicle is locked (e.g., based on a message communicated by the vehicle an received by the GDO remote control 302), that the current time is within a time scheduled for occupancy monitoring (e.g., based on a schedule stored in the remote memory 375), or that the sound level within the cabin is above a certain threshold as sensed by the microphone 425.

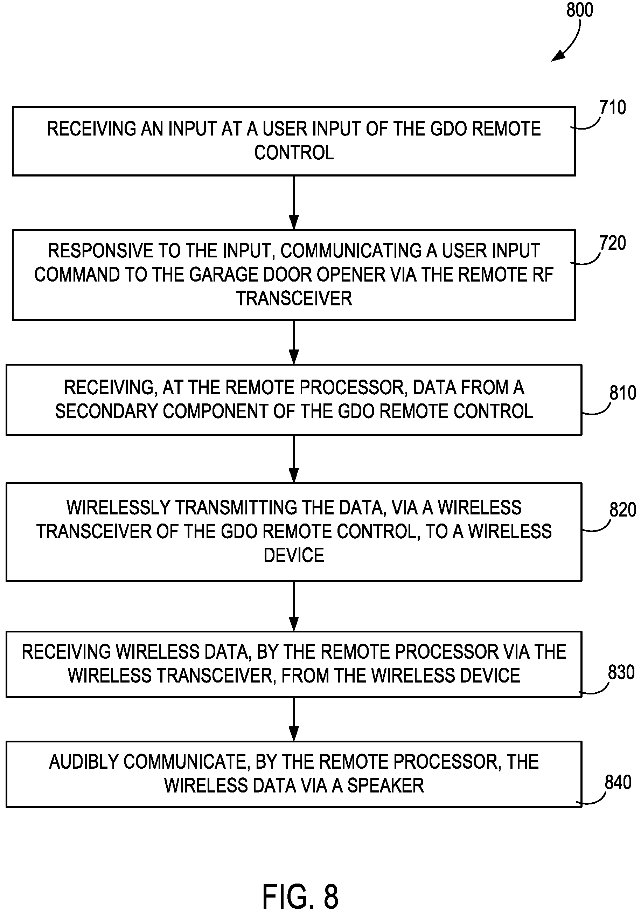

FIG. 8 is a flow chart that illustrates a method 800 for wireless communication via secondary components 385 of the GDO remote control 302. Although explained with respect to the system 500, the method 800 is also be applicable to other systems in some embodiments. Additionally, the method 800 is explained with the user of three particular examples. More particularly, in a first example described with respect to the method 800, the GDO remote control 302 includes a secondary function as a hands-free, microphone-speaker phone adapter for a wireless phone. In a second example described with respect to the method 800, the GDO remote control 302 includes a secondary function of providing traffic alerts. In a third example described with respect to the method 800, the GDO remote control 302 includes a secondary function of providing toll payments. These three examples are used for illustration purposes. However, the method 800 is not limited to these three examples.

The method 800 begins with steps 710 and 720 as described above with respect to the method 700. That is, in step 710, an input is received at a user input of the GDO remote control 302 (i.e., a remote control device), and, in step 720, responsive to the input, the remote processor 370 communicates a user input command to the garage door opener 100 via the remote RF transceiver 380.

In step 810, the remote processor 370 of the GDO remote control 302 receives data from a secondary component 385. In the first (hands-free phone adapter) example, the data includes an audio signal output from the microphone 425. In the second (traffic alert) example, the data includes location data from the GNSS receiver 485. In the third (toll pass) example, the data includes a user's toll pass unique identification code from a memory of the cruise card transceiver 470. For example, the GDO remote control 302 may be positioned within a vehicle (e.g., on a visor or otherwise near or on a front windshield). When the vehicle passes within range of a toll pass reader, such as while on a tool highway having toll pass readers associated with vehicle lanes on the highway at toll areas, the toll pass reader transmits a read request to the cruise card transceiver 470. In response to the read request, the cruise card transceiver 470 transmits the toll pass unique identification code to the remote processor 370.

In step 820, the remote processor 370 wirelessly transmits the data received in step 810 to a wireless device via a wireless transceiver of the GDO remote control 302. In the first example, the remote processor 370 controls the wireless radio 480 to transmit the audio signal from the microphone 425 to a wireless phone, such as the smart phone 256. For example, the wireless radio 480 and the smart phone 256 may communicate via short-range radio frequency (RF) communications, such as using the Bluetooth protocol. In the second example, the location data is transmitted via the wireless radio 480 to a remote server (e.g., the server 250). For example, the wireless radio 480 may be a cellular radio that communicates with a cellular data network, and the location data is transmitted to the server via the cellular data network using, for example, the 3G or Long-Term Evolution (LTE) protocol. Alternatively, the wireless radio 480 may communicate the location data to the smart phone 256 using short-range RF communications, and the smart phone 256 may route the communications via the cellular data network to the remote server. In the third example, the remote processor 370 controls the cruise card transceiver 470 to transmit the tool pass unique identification code to a tool pass reader.

In step 830, the remote processor 370 receives wireless data from the wireless device via the wireless transceiver. In the first example, the wireless data includes voice data from the wireless phone, such as the smart phone 256. For example, the voice data is obtained by a microphone of the smart phone 256. In the second example, the wireless data includes traffic data from the remote server. For example, the traffic data may include a traffic alert indicating a level of traffic, construction, or accidents on the roadway on which the location data indicated that the vehicle having the GDO remote control 302 is driving. The remote server includes navigation services and databases configured to provide traffic alerts based on location data. In some embodiments, the location data is provided to the remote server (in step 820) with a user identifier that identifies the user of the GDO remote control 302. The user identifier is used to index user data on the remote server, such as typical travel routes (e.g., to/from place of employment, school, home, or other common destinations of the user). In turn, traffic alerts are generated based on the location data in combination with the user profile data to identify when a traffic alert applies to the user's typical travel routes given the present location indicate dby the location data. In the third example, the wireless data includes confirmation data that confirms payment of the toll.

In step 840, the remote processor 370 audibly communicates the wireless data via the speaker 410 of the GDO remote control 302. In the first example, the voice data received from the remote wireless phone is communicated to a user via the speaker 410. In the second example, the traffic alert received is communicated to a user via the speaker 410. In the third example, a confirmation is audibly conveyed via the speaker 410. In some embodiments, in the third example, the receipt of confirmation data and audible conveyance of the confirmation data is bypassed.

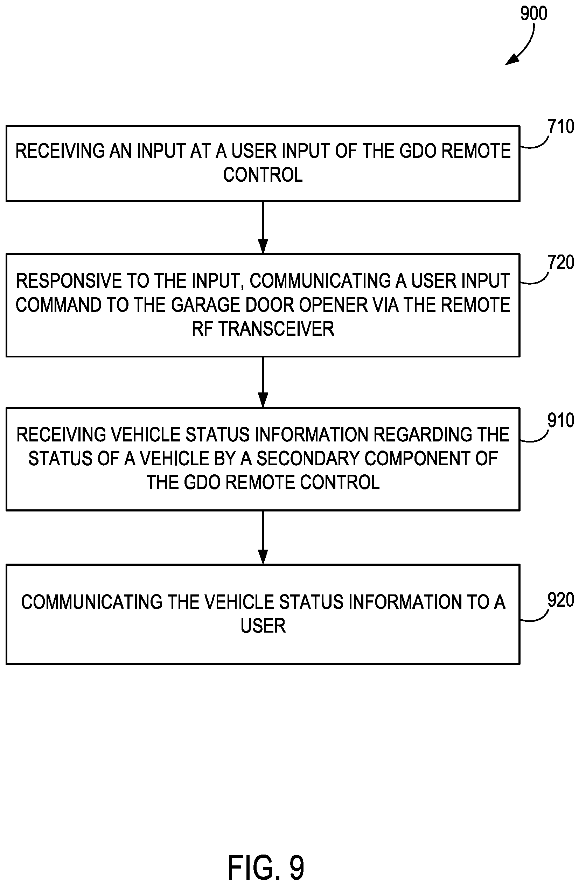

FIG. 9 is a flow chart that illustrates a method 900 for communicating vehicle status to users via secondary components of a garage door opener remote control device. Although explained with respect to the system 500, the method 900 is also be applicable to other systems in some embodiments. The method 900 begins with steps 710 and 720 as described above with respect to the method 700. That is, in step 710, an input is received at a user input of the GDO remote control 302 (i.e., a remote control device), and, in step 720, responsive to the input, the remote processor 370 communicates a user input command to the garage door opener 100 via the remote RF transceiver 380.

In step 910, the remote processor 370 of the GDO remote control 302 receives vehicle status information regarding a status of a vehicle via one or more of the secondary components 385 that are communicatively coupled to vehicle electronics, for example, an electronic processor on the vehicle that is in combination with vehicle sensors, vehicle gauges, or vehicle alarm and warning systems. For example, the on board diagnostics (OBD) connector 475 may be connected to the vehicle electronics by way of a vehicle-side OBD connector that mates with the OBD connector 475. The remote processor 370 and the vehicle electronics communicate via the mated OBD connectors to provide vehicle status information from the vehicle to the remote processor 370. In some embodiments, the remote processor 370 communicates with the vehicle electronics using the wireless radio 480, for example, using short-range RF communications.

In step 920, the remote processor 370 communicates the vehicle status information to a user. For example, the vehicle status information may be communicated via the speaker 410 of the GDO remote control 302, via the wireless radio 480 to a remote wireless communication device (e.g., a wireless phone, personal computer, or server), or via the laser 415 to project vehicle status information on a surface (e.g., a wall at which the laser 415 is directed).

In one example, the method 900 is used to detect and then communicate to a user that a vehicle door is open, the tire pressure is low, low oil warning, or that an active vehicle component (e.g., engine or lights) should be turned off. The remote processor 370 may determine from the received vehicle status information that the door is open, that the tire pressure is low, that the oil level is low, or that vehicle components are active. The remote processor 370 is configured to determine, in step 920, that the vehicle door should be closed because it has been open for more than a predetermined amount of time (e.g., based on a comparison of the current time to the time at which the vehicle door open information was first received), or that the active vehicle component should be deactivated because it has been active for more than a predetermined amount of time and no occupants are present in the vehicle (based on output from the occupancy sensor 435). These warnings may then be conveyed in step 920 in various ways, as noted above.

In another example, a parking sensor of the vehicle is used to detect proximity (i.e., distance) to a wall or obstacle in front of or behind the vehicle. The distance is conveyed to the remote processor 370 in step 910. In turn, in step 920, the remote processor 370 controls the laser 415, speaker 410, or both, to visually or audibly convey the distance and an instruction to stop when the remote processor 370 determines that the distance is below a threshold (e.g., "3ft," "2ft," "1ft," "stop"). Accordingly, in this example, the GDO remote control 302 provides parking assistance based on data received from the vehicle.

In another example, the remote processor 370 receives in step 910 an indication that the vehicle is being broken into based on a message from the vehicle electronics (e.g., in response to a detected broken window). In response, in step 920, the remote processor 370 controls the wireless radio 480 to communicate a notification to the smart phone 256, either directly via short range RF communications or via a network, such as a cellular network, Wi-Fi network, the Internet, or a combination thereof. In response, the smart phone 256 generates one or more of an audible, visual, and tactile alert to the user.

The processors described herein are electronic processors and may be configured to carry out the functionality attributed thereto via execution of instructions stored on a compute readable medium (e.g. one of the illustrated memories), in hardware circuits (e.g., an application specific integrated circuit (ASIC) or field programmable gate array) configured to perform the functions, or a combination thereof.

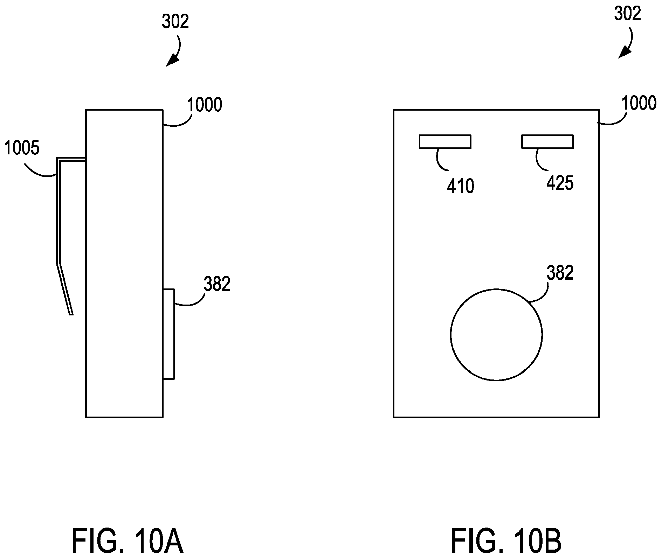

FIGS. 10A and 10B illustrate a front and side view, respectively, of the GDO remote control 302 according to some embodiments. As illustrated, the GDO remote control 302 includes a housing 1000 and a clip 1005. The clip is used, for example, to secure the GDO remote control 302 to a sun visor in a vehicle. The GDO remote control 302 further includes the input button 382 to actuate the garage door opener, the speaker 410, and the microphone 425, as discussed above. Additionally, the housing 1000 contains and supports one or more further secondary components 385 illustrated in FIG. 6 and discussed above, for example, with respect to FIGS. 6-9.

Although the invention has been described in detail with reference to certain preferred embodiments, variations and modifications exist within the scope of one or more independent aspects of the invention as described.

## Claims

1. A remote control device (302) of a garage door opener system, the remote control device comprising:
a user input (382) configured to receive an input from a user;
a wireless communication interface configured to communicate with a garage door opener (100);
secondary components (385) including a secondary sensor (405, 410, 415, 420, 425, 430, 435, 440, 445, 450, 455, 460, 465) and a secondary actuatable component;
an electronic processor (370) communicatively coupled via a communication bus (390) to the secondary components, the user input, and the wireless communication interface, the electronic processor further communicatively coupled to a memory (375) storing instructions that when executed by the electronic processor cause the electronic processor to:
responsive to the input at the user input, communicate a user input command to the garage door opener to operate a motor (212) configured to drive a garage door (104),
detect stimuli in a space associated with the remote control device based on sensory data output from the secondary sensor of the remote control device,
determine a responsive action to the stimuli detected in the space associated with the remote control device, and
control the secondary actuatable component and an accessory device of the garage door opener to perform the responsive action, wherein the accessory device is configured to selectively couple to a module port (223) on the garage door opener.

2. The remote control device (302) of claim 1, wherein the secondary actuatable component of the remote control device includes the wireless communication interface and the responsive action includes communicating information based on the detected stimuli via a wireless network to at least one selected from the group consisting of a remote electronic server (250) and a wireless phone (256).

3. The remote control device (302) of claim 1, wherein the secondary sensor (405, 410, 415, 420, 425, 430, 435, 440, 445, 450, 455, 460, 465) includes a microphone (425), the sensory data output from the microphone includes audio signals comprising a user voice command that indicates the responsive action, the responsive action including at least one selected from the group consisting of sending an alert to a wireless device (256) of the user, activating the secondary actuatable component, and activating the accessory device.

4. The remote control device (302) of claim 1, wherein the secondary actuatable component includes the wireless communication interface and the responsive action is one selected from the group consisting of sending a command to close the garage door (104), sending a command to open the garage door, and activating a garage door accessory that is controlled by the garage door opener (100);
OR
the secondary actuatable component of the remote control device includes a second secondary sensor (405, 410, 415, 420, 425, 430, 435, 440, 445, 450, 455, 460, 465) that is activated to generate a second sensory data output, and the electronic processor (370) is further configured to:
detect a second stimuli in the space associated with the remote control device based on the second sensory data output, and
determine a second responsive action based on the second stimuli.

5. The remote control device (302) of claim 1, wherein the secondary actuatable component of the remote control device includes a speaker (410) and the responsive action includes audibly communicating information via the speaker based on the detected stimuli in the space associated with the remote control device, wherein the audibly communicated information is at least one selected from the group consisting of driving directions for parking a vehicle based on output from a parking sensor (465) of the secondary sensor (405, 410, 415, 420, 425, 430, 435, 440, 445, 450, 455, 460, 465), object proximity alerts to a driver based on output from an external infrared proximity sensor (440, 465) of the secondary sensor, air quality alerts to a driver based on output from an environmental sensor of the secondary sensor, car speed based on output from an accelerometer (445) of the secondary sensor, and an alert to awaken a driver based on images captured by a camera (420) of the secondary sensor that captures images of a driver that are analyzed by software to detect whether the driver is falling asleep.

6. The remote control device (302) of claim 1, wherein the secondary sensor includes a proximity sensor (440, 465) that senses when the remote control device is within or beyond a predetermined proximity of a location, and actuates an RF transceiver (380) to instruct the garage door opener (100) to close the garage door (104) when the remote control device is beyond the predetermined proximity and the garage door is open, and open the garage door when the remote control device is within the predetermined proximity and the garage door is closed.

7. The remote control device (302) of claim 1, wherein the remote control device is attached to a vehicle and the secondary sensor (405, 410, 415, 420, 425, 430, 435, 440, 445, 450, 455, 460, 465) includes an accelerometer (445) that detects motion of the vehicle, and, the responsive action includes communicating, by an RF transceiver of the secondary actuatable component, an alert indicating the motion of the vehicle to a wireless device (256) of the user via the garage door opener (100) and a communication network (254).

8. A method (700) for secondary functions of a garage door opener remote control device (302), the method comprising:
receiving an input at a user input (382) of a remote control device;
responsive to the input, communicating, by an electronic processor (370) of the remote control device, a user input command to a garage door opener (100) via a wireless communication interface of the remote control device, the user input command providing a command to operate a motor (212) configured to drive a garage door (104);
detecting stimuli in a space associated with the remote control device, by the electronic processor, based on sensory data output from a secondary sensor (405, 410, 415, 420, 425, 430, 435, 440, 445, 450, 455, 460, 465) of the remote control device;
determining, by the electronic processor, a responsive action to the stimuli detected in the space associated with the remote control device; and
controlling, by the electronic processor, a secondary actuatable component of the remote control device and an accessory device of the garage door opener to perform the responsive action, wherein the accessory device is configured to selectively couple to a module port (223) on the garage door opener.

9. The method (700) of claim 8, wherein the secondary actuatable component of the remote control device (302) includes the wireless communication interface and the responsive action includes communicating information based on the detected stimuli via a wireless network to at least one selected from the group consisting of a remote electronic server device and a wireless phone (256).

10. The method (700) of claim 8, wherein the secondary sensor (405, 410, 415, 420, 425, 430, 435, 440, 445, 450, 455, 460, 465) includes a microphone (425), the sensory data output from the microphone includes audio signals comprising a user voice command that indicates the responsive action, the responsive action including at least one selected from the group consisting of sending an alert to a user wireless device (256), activating the secondary actuatable component, and activating the accessory device that is coupled to the garage door opener (100);
OR
the secondary sensor includes a proximity sensor (440) that senses when the remote control device is within or beyond a predetermined proximity of a location, and actuates an RF transceiver (380) to instruct the garage door opener to close the garage door controlled by the garage door opener when the remote control device is beyond the predetermined proximity and the garage door is open, and open the garage door when the remote control device is within the predetermined proximity and the garage door is closed.

11. The method (700) of claim 8, wherein the secondary actuatable component includes a further wireless communication interface and the responsive action is one selected from the group consisting of sending a command to close the garage door (104), sending a command to open the garage door, and activating a garage door accessory that is controlled by the garage door opener (100);
OR
the secondary actuatable component of the remote control device includes a speaker and the responsive action includes audibly communicating information via the speaker (410) based on the detected stimuli in the space associated with the remote control device, wherein the audibly communicated information is at least one selected from the group consisting of driving directions for parking a vehicle based on output from a parking sensor (465) of the secondary sensor, object proximity alerts to a driver based on output from an external infrared proximity sensor (440) of the secondary sensor, air quality alerts to a driver based on output from an environmental sensor of the secondary sensor, car speed based on output from an accelerometer (445) of the secondary sensor, and an alert to awaken a driver based on images captured by a camera (420) of the secondary sensor that captures images of a driver and analyzed by software to detect whether the driver is falling asleep.

12. The method (700) of claim 8, wherein the secondary actuatable component of the remote control device (302) includes a second secondary sensor (405, 410, 415, 420, 425, 430, 435, 440, 445, 450, 455, 460, 465) that is activated to generate a second sensory data output for detection of a second stimuli in the space associated with the remote control device, the method further comprising determining, by the electronic processor, a second responsive action based on the second stimuli.

13. The method (700) of claim 8, wherein the remote control device is attached to a vehicle and the secondary sensor includes an accelerometer (445) that detects motion of the vehicle, and, in response, an RF transceiver of the secondary actuatable component communicates an alert indicating the motion of vehicle to a wireless device (256) of a user via the garage door opener (100) and a communication network (254).

14. A remote control device (302) of a garage door opener system, the remote control device comprising:
a user input (382) configured to receive an input from a user;
a wireless communication interface configured to communicate with a garage door opener (100); and
an electronic processor (370) communicatively coupled via a communication bus (390) to the user input, and the wireless communication interface, and a sensor (405, 410, 415, 420, 425, 430, 435, 440, 445, 450, 455, 460, 465);
the electronic processor further communicatively coupled to a memory (375) storing instructions that when executed by the electronic processor cause the electronic processor to:
responsive to the input at the user input, communicate a user input command to the garage door opener to operate a motor (212) configured to drive a garage door (104),
responsive to data received from the sensor, transmit information based on the sensor data to the garage door opener via the wireless communication interface for a user notification, and
control an accessory device configured to selectively couple to a module port (223) of the garage door opener to generate the user notification based on the information.

15. The remote control device (302) of claim 14, wherein the sensor (405, 410, 415, 420, 425, 430, 435, 440, 445, 450, 455, 460, 465) is at least one selected from the group consisting of:
a parking sensor (465), an external infrared proximity sensor (440, 465), an environmental sensor (430), an accelerometer (445), a camera (420), and a microphone (425);
OR
the garage door opener transmits the user notification based on the sensor data information to a user device via a communication network coupled to the garage door opener, and the user device is at least one selected from the group consisting of a personal wireless communication device, a personal computing device, and a server.

## Patentansprüche

1. Fernsteuerungsvorrichtung (302) eines Garagentoröffnersystems, wobei die Fernsteuerungsvorrichtung umfasst:
einen Benutzereingang (382), der konfiguriert ist, um eine Eingabe von einem Benutzer zu empfangen;
eine drahtlose Kommunikationsschnittstelle, die konfiguriert ist, um mit einem Garagentoröffner (100) zu kommunizieren;
sekundäre Komponenten (385) einschließlich eines sekundären Sensors (405, 410, 415, 420, 425, 430, 435, 440, 445, 450, 455, 460, 465) und einer sekundären betätigbaren Komponente;
einen elektronischen Prozessor (370), der kommunikativ über einen Kommunikationsbus (390) mit den sekundären Komponenten, dem Benutzereingang und der drahtlosen Kommunikationsschnittstelle gekoppelt ist, wobei der elektronische Prozessor ferner kommunikativ mit einem Speicher (375) zum Speichern von Anweisungen gekoppelt ist, die bei Ausführung durch den elektronischen Prozessor den elektronischen Prozessor veranlassen zum:
Kommunizieren, als Reaktion auf die Eingabe am Benutzereingang, eines vom Benutzer eingegebenen Befehls an den Garagentoröffner, um einen Motor (212) zu betreiben, der für den Antrieb eines Garagentors (104) konfiguriert ist,
Detektieren von Stimuli in einem zu der Fernsteuerungsvorrichtung gehörigen Raum basierend auf sensorischen Daten, die von dem sekundären Sensor der Fernsteuerungsvorrichtung ausgegeben werden;
Bestimmen einer Antwortaktion auf die Stimuli, die in dem zu der Fernsteuerungsvorrichtung gehörigen Raum detektiert wurden, und
Steuern der sekundären betätigbaren Komponente und einer Zubehörvorrichtung des Garagentoröffners, um die Antwortaktion durchzuführen, wobei die Zubehörvorrichtung konfiguriert ist, um selektiv mit einem Modulport (223) an dem Garagentoröffner gekoppelt zu werden.

2. Fernsteuerungsvorrichtung (302) nach Anspruch 1, wobei die sekundäre betätigbare Komponente der Fernsteuerungsvorrichtung die drahtlose Kommunikationsschnittstelle einschließt und die Antwortaktion das Kommunizieren von Informationen basierend auf den detektierten Stimuli über ein drahtloses Netzwerk an mindestens eines ausgewählt aus der Gruppe bestehend aus einem entfernten elektronischen Server (250) und einem drahtlosen Telefon (256) einschließt.

3. Fernsteuerungsvorrichtung (302) nach Anspruch 1, wobei der sekundäre Sensor (405, 410, 415, 420, 425, 430, 435, 440, 445, 450, 455, 460, 465) ein Mikrofon (425) einschließt, die von dem Mikrofon ausgegebenen sensorischen Daten Audiosignale umfassend einen Benutzersprachbefehl einschließen, der die Antwortaktion angibt, wobei die Antwortaktion mindestens eines ausgewählt aus der Gruppe bestehend aus dem Senden einer Warnung an eine drahtlose Vorrichtung (256) des Benutzers, dem Aktivieren der sekundären betätigbaren Komponente und dem Aktivieren der Zubehörvorrichtung einschließt.

4. Fernsteuerungsvorrichtung (302) nach Anspruch 1, wobei die sekundäre betätigbare Komponente die drahtlose Kommunikationsschnittstelle einschließt und die Antwortaktion eine Aktion ist ausgewählt aus der Gruppe bestehend aus dem Senden eines Befehls zum Schließen des Garagentors (104), dem Senden eines Befehls zum Öffnen des Garagentors und dem Aktivieren eines durch den Garagentoröffner (100) gesteuerten Garagentorzubehörs;
ODER
wobei die sekundäre betätigbare Komponente der Fernsteuerungsvorrichtung einen zweiten sekundären Sensor (405, 410, 415, 420, 425, 430, 435, 440, 445, 450, 455, 460, 465) einschließt, der aktiviert wird, um eine zweite Ausgabe von sensorischen Daten zu erzeugen, und der elektronische Prozessor (370) ferner konfiguriert ist zum:
Detektieren eines zweiten Stimulus in dem zu der Fernsteuerungsvorrichtung gehörigen Raum basierend auf der zweiten Ausgabe von sensorischen Daten; und
Bestimmen einer zweiten Antwortaktion basierend auf dem zweiten Stimulus.

5. Fernsteuerungsvorrichtung (302) nach Anspruch 1, wobei die sekundäre betätigbare Komponente der Fernsteuerungsvorrichtung einen Lautsprecher (410) einschließt und die Antwortaktion das hörbare Kommunizieren von Informationen über den Lautsprecher basierend auf den detektierten Stimuli in dem zu der Fernsteuerungsvorrichtung gehörigen Raum einschließt, wobei die hörbar kommunizierten Informationen mindestens eines sind ausgewählt aus der Gruppe bestehend aus Fahranweisungen zum Einparken eines Fahrzeugs basierend auf einer Ausgabe von einem Einparksensor (465) des sekundären Sensors (405, 410, 415, 420, 425, 430, 435, 440, 445, 450, 455, 460, 465), Objektnähewarnungen an einen Fahrer basierend auf einer Ausgabe von einem externen Infrarot-Näherungssensor (440, 465) des sekundären Sensors, Luftqualitätswarnungen an einen Fahrer basierend auf einer Ausgabe von einem Umgebungssensor des sekundären Sensors, Fahrzeuggeschwindigkeit basierend auf einer Ausgabe von einem Beschleunigungsmesser (445) des sekundären Sensors und einer Warnung zum Aufwecken eines Fahrers basierend auf Bildern, die durch eine Kamera (420) des sekundären Sensors aufgenommen wurden, der Bilder von einem Fahrer aufnimmt, welche mittels Software analysiert werden, um zu erkennen, ob der Fahrer kurz vor dem Einschlafen ist.

6. Fernsteuerungsvorrichtung (302) nach Anspruch 1, wobei der sekundäre Sensor einen Näherungssensor (440, 465) einschließt, der erfasst, wenn sich die Fernsteuerungsvorrichtung innerhalb oder außerhalb einer vorbestimmten Nähe eines Orts befindet, und einen RF-Senderempfänger (380) betätigt, um den Garagentoröffner (100) anzuweisen, das Garagentor (104) zu schließen, wenn sich die Fernsteuerungsvorrichtung außerhalb der vorbestimmten Nähe befindet und das Garagentor offen ist, und das Garagentor zu öffnen, wenn sich die Fernsteuerungsvorrichtung innerhalb der vorbestimmten Nähe befindet und das Garagentor geschlossen ist.

7. Fernsteuerungsvorrichtung (302) nach Anspruch 1, wobei die Fernsteuerungsvorrichtung an einem Fahrzeug angebracht ist und der sekundäre Sensor (405, 410, 415, 420, 425, 430, 435, 440, 445, 450, 455, 460, 465) einen Beschleunigungsmesser (445) einschließt, der die Bewegung des Fahrzeugs detektiert, und die Antwortaktion das Kommunizieren, durch einen RF-Senderempfänger der sekundären betätigbaren Komponente, eine Warnung einschließt, die einer drahtlosen Vorrichtung (256) des Benutzers über den Garagentoröffner (100) und ein Kommunikationsnetz (254) die Bewegung des Fahrzeugs anzeigt.

8. Verfahren (700) für sekundäre Funktionen einer Garagentoröffner-Fernsteuerungsvorrichtung (302), wobei das Verfahren umfasst:
Empfangen einer Eingabe an einem Benutzereingang (382) einer Fernsteuerungsvorrichtung;
als Reaktion auf die Eingabe, Kommunizieren, durch einen elektronischen Prozessor (370) der Fernsteuerungsvorrichtung, eines von einem Benutzer eingegebenen Befehls an einen Garagentoröffner (100) über eine drahtlose Kommunikationsschnittstelle der Fernsteuerungsvorrichtung, wobei der vom Benutzer eingegebene Befehl einen Befehl zum Betreiben eines Motors (212) bereitstellt, der für den Antrieb eines Garagentors (104) konfiguriert ist;
Detektieren von Stimuli in einem zu der Fernsteuerungsvorrichtung gehörigen Raum durch den elektronischen Prozessor basierend auf sensorischen Daten, die von einem sekundären Sensor (405, 410, 415, 420, 425, 430, 435, 440, 445, 450, 455, 460, 465) der Fernsteuerungsvorrichtung ausgegeben werden;
Bestimmen, durch den elektronischen Prozessor, einer Antwortaktion auf die Stimuli, die in dem zu der Fernsteuerungsvorrichtung gehörigen Raum detektiert wurden; und
Steuern, durch den elektronischen Prozessor, der sekundären betätigbaren Komponente der Fernsteuerungsvorrichtung und einer Zubehörvorrichtung des Garagentoröffners, um die Antwortaktion durchzuführen, wobei die Zubehörvorrichtung konfiguriert ist, um selektiv mit einem Modulport (223) an dem Garagentoröffner gekoppelt zu werden.

9. Verfahren (700) nach Anspruch 8, wobei die sekundäre betätigbare Komponente der Fernsteuerungsvorrichtung (302) die drahtlose Kommunikationsschnittstelle einschließt und die Antwortaktion das Kommunizieren von Informationen basierend auf den detektierten Stimuli über ein drahtloses Netzwerk an mindestens eines ausgewählt aus der Gruppe bestehend aus einer entfernten elektronischen Servervorrichtung und einem drahtlosen Telefon (256) einschließt.

10. Verfahren (700) nach Anspruch 8, wobei der sekundäre Sensor (405, 410, 415, 420, 425, 430, 435, 440, 445, 450, 455, 460, 465) ein Mikrofon (425) einschließt, die von dem Mikrofon ausgegebenen sensorischen Daten Audiosignale umfassend einen Benutzersprachbefehl einschließen, der die Antwortaktion angibt, wobei die Antwortaktion mindestens eines ausgewählt aus der Gruppe bestehend aus dem Senden einer Warnung an eine drahtlose Vorrichtung (256) des Benutzers, dem Aktivieren der sekundären betätigbaren Komponente und dem Aktivieren der mit dem Garagentoröffner (100) gekoppelten Zubehörvorrichtung einschließt;
ODER
wobei der sekundäre Sensor einen Näherungssensor (440) einschließt, der erfasst, wenn sich die Fernsteuerungsvorrichtung innerhalb oder außerhalb einer vorbestimmten Nähe eines Orts befindet, und einen RF-Senderempfänger (380) betätigt, um den Garagentoröffner (100) anzuweisen, das durch den Garagentoröffner gesteuerte Garagentor zu schließen, wenn sich die Fernsteuerungsvorrichtung außerhalb der vorbestimmten Nähe befindet und das Garagentor offen ist, und das Garagentor zu öffnen, wenn sich die Fernsteuerungsvorrichtung innerhalb der vorbestimmten Nähe befindet und das Garagentor geschlossen ist.

11. Verfahren (700) nach Anspruch 8, wobei die sekundäre betätigbare Komponente eine weitere drahtlose Kommunikationsschnittstelle einschließt und die Antwortaktion eine Aktion ist ausgewählt aus der Gruppe bestehend aus dem Senden eines Befehls zum Schließen des Garagentors (104), dem Senden eines Befehls zum Öffnen des Garagentors und dem Aktivieren eines durch den Garagentoröffner (100) gesteuerten Garagentorzubehörs;
ODER
wobei die sekundäre betätigbare Komponente der Fernsteuerungsvorrichtung einen Lautsprecher einschließt und die Antwortaktion das hörbare Kommunizieren von Informationen über den Lautsprecher (410) basierend auf den detektierten Stimuli in dem zu der Fernsteuerungsvorrichtung gehörigen Raum einschließt, wobei die hörbar kommunizierten Informationen mindestens eines sind ausgewählt aus der Gruppe bestehend aus Fahranweisungen zum Einparken eines Fahrzeugs basierend auf einer Ausgabe von einem Einparksensor (465) des sekundären Sensors, Objektnähewarnungen an einen Fahrer basierend auf einer Ausgabe von einem externen Infrarot-Näherungssensor (440) des sekundären Sensors, Luftqualitätswarnungen an einen Fahrer basierend auf einer Ausgabe von einem Umgebungssensor des sekundären Sensors, Fahrzeuggeschwindigkeit basierend auf einer Ausgabe von einem Beschleunigungsmesser (445) des sekundären Sensors und einer Warnung zum Aufwecken eines Fahrers basierend auf Bildern, die durch eine Kamera (420) des sekundären Sensors aufgenommen wurden, der Bilder von einem Fahrer aufnimmt, Bilder die mittels Software analysiert werden, um zu erkennen, ob der Fahrer kurz vor dem Einschlafen ist.

12. Verfahren (700) nach Anspruch 8, wobei die sekundäre betätigbare Komponente der Fernsteuerungsvorrichtung (302) einen zweiten sekundären Sensors (405, 410, 415, 420, 425, 430, 435, 440, 445, 450, 455, 460, 465) umfasst, der aktiviert wird, um eine zweite Ausgabe von sensorischen Daten zur Detektion eines zweiten Stimulus in dem zu der Fernsteuerungsvorrichtung gehörigen Raum zu erzeugen, wobei das Verfahren ferner das Bestimmen, durch den elektronischen Prozessor, einer zweiten Antwortaktion basierend auf dem zweiten Stimulus umfasst.

13. Verfahren (700) nach Anspruch 8, wobei die Fernsteuerungsvorrichtung an einem Fahrzeug angebracht ist und der sekundäre Sensor einen Beschleunigungsmesser (445) einschließt, der Bewegung des Fahrzeugs detektiert, und wobei als Reaktion darauf ein RF-Senderempfänger der sekundären betätigbaren Komponente eine Warnung kommuniziert, die einer drahtlosen Vorrichtung (256) eines Benutzers über den Garagentoröffner (100) und ein Kommunikationsnetz (254) die Bewegung des Fahrzeugs anzeigt.

14. Fernsteuerungsvorrichtung (302) eines Garagentoröffnersystems, wobei die Fernsteuerungsvorrichtung umfasst:
ein Benutzereingang (382), die konfiguriert ist, um eine Eingabe von einem Benutzer zu empfangen;
eine drahtlose Kommunikationsschnittstelle, die konfiguriert ist, um mit einem Garagentoröffner (100) zu kommunizieren; und
einen elektronischen Prozessor (370), der kommunikativ über einen Kommunikationsbus (390) mit dem Benutzereingang und der drahtlosen Kommunikationsschnittstelle und einem Sensor (405, 410, 415, 420, 425, 430, 435, 440, 445, 450, 455, 460, 465) gekoppelt ist;
wobei der elektronische Prozessor ferner kommunikativ mit einem Speicher (375) zum Speichern von Anweisungen gekoppelt ist, die bei Ausführung durch den elektronischen Prozessor den elektronischen Prozessor veranlassen zum:
Kommunizieren, als Reaktion auf die Eingabe am Benutzereingang, eines vom Benutzer eingegebenen Befehls an den Garagentoröffner, um einen Motor (212) zu betreiben, der für den Antrieb eines Garagentors (104) konfiguriert ist,
Senden, als Reaktion auf die von dem Sensor empfangenen Daten, von Informationen basierend auf den Sensordaten an den Garagentoröffner über die drahtlose Kommunikationsschnittstelle für eine Benutzerbenachrichtigung, und
Steuern einer Zubehörvorrichtung, die konfiguriert ist, um selektiv mit einem Modulport (223) des Garagentoröffners gekoppelt zu werden, um die Benutzerbenachrichtigung basierend auf den Informationen zu erzeugen.

15. Fernsteuerungsvorrichtung (302) nach Anspruch 14, wobei der Sensor (405, 410, 415, 420, 425, 430, 435, 440, 445, 450, 455, 460, 465) mindestens eines ist ausgewählt aus der Gruppe bestehend aus: einem Einparksensor (465), einem externen Infrarot-Näherungssensor (440, 465), einem Umgebungssensor (430), einem Beschleunigungsmesser (445), einer Kamera (420) und einem Mikrofon (425);
ODER
wobei der Garagentoröffner die Benutzerbenachrichtigung basierend auf Sensordateninformationen an eine Benutzervorrichtung über ein Kommunikationsnetzwerk überträgt, das mit dem Garagentoröffner gekoppelt ist, und die Benutzervorrichtung mindestens eines ist ausgewählt aus der Gruppe bestehend aus einer persönlichen drahtlosen Kommunikationsvorrichtung, einer persönlichen Computervorrichtung und einem Server.

## Revendications

1. Dispositif de commande à distance (302) d'un système d'ouverture de porte de garage, le dispositif de commande à distance comprenant :
une entrée utilisateur (382) configurée pour recevoir une entrée en provenance d'un utilisateur ;
une interface de communication sans fil configurée pour communiquer avec un dispositif d'ouverture de porte de garage (100) ;
des composants secondaires (385) comprenant un capteur secondaire (405, 410, 415, 420, 425, 430, 435, 440, 445, 450, 455, 460, 465) et un composant actionnable secondaire ;
un processeur électronique (370) couplé en communication, par l'intermédiaire d'un bus de communication (390), aux composants secondaires, à l'entrée utilisateur et à l'interface de communication sans fil, le processeur électronique étant en outre couplé en communication à une mémoire (375) stockant des instructions qui, lorsqu'elles sont exécutées par le processeur électronique, amènent le processeur électronique à :
en réponse à l'entrée au niveau de l'entrée utilisateur, communiquer une instruction d'entrée utilisateur au dispositif d'ouverture de porte de garage afin de faire fonctionner un moteur (212) configuré pour entraîner une porte de garage (104) ;
détecter des stimuli dans un espace associé au dispositif de commande à distance, sur la base de données sensorielles fournies en sortie à partir du capteur secondaire du dispositif de commande à distance ;
déterminer une action en réponse aux stimuli détectés dans l'espace associé au dispositif de commande à distance ; et
commander le composant actionnable secondaire et un dispositif accessoire du dispositif d'ouverture de porte de garage pour mettre en oeuvre l'action en réponse, dans lequel le dispositif accessoire est configuré pour se coupler sélectivement à un port de module (223) sur le dispositif d'ouverture de porte de garage.

2. Dispositif de commande à distance (302) selon la revendication 1, dans lequel le composant actionnable secondaire du dispositif de commande à distance inclut l'interface de communication sans fil, et l'action en réponse inclut la communication des informations basées sur les stimuli détectés, par l'intermédiaire d'un réseau sans fil, à au moins un sélectionné parmi le groupe constitué par un serveur électronique à distance (250) et un téléphone sans fil (256).

3. Dispositif de commande à distance (302) selon la revendication 1, dans lequel le capteur secondaire (405, 410, 415, 420, 425, 430, 435, 440, 445, 450, 455, 460, 465) inclut un microphone (425), dans lequel les données sensorielles fournies en sortie à partir du microphone incluent des signaux audio comprenant une instruction vocale d'utilisateur qui indique l'action en réponse, l'action en réponse incluant au moins une sélectionnée parmi le groupe consistant à envoyer une alerte à un dispositif sans fil (256) de l'utilisateur, à activer le composant actionnable secondaire, et à activer le dispositif accessoire.

4. Dispositif de commande à distance (302) selon la revendication 1, dans lequel le composant actionnable secondaire inclut l'interface de communication sans fil, et l'action en réponse correspond à une action sélectionnée parmi le groupe consistant à envoyer une instruction pour fermer la porte de garage (104), à envoyer une instruction pour ouvrir la porte de garage, et à activer un accessoire de porte de garage commandé par le dispositif d'ouverture de porte de garage (100) ;
OU
le composant actionnable secondaire du dispositif de commande à distance inclut un second capteur secondaire (405, 410, 415, 420, 425, 430, 435, 440, 445, 450, 455, 460, 465) qui est activé pour générer une seconde sortie de données sensorielles, et le processeur électronique (370) est en outre configuré pour :
détecter un second stimulus dans l'espace associé au dispositif de commande à distance sur la base de la seconde sortie de données sensorielles ; et
déterminer une seconde action en réponse sur la base du second stimulus.

5. Dispositif de commande à distance (302) selon la revendication 1, dans lequel le composant actionnable secondaire du dispositif de commande à distance inclut un haut-parleur (410) et l'action en réponse consiste à communiquer de manière audible des informations, par l'intermédiaire du haut-parleur, sur la base des stimuli détectés dans l'espace associé au dispositif de commande à distance, dans lequel les informations communiquées de manière audible correspondent à au moins une sélectionnée parmi le groupe constitué par des instructions de conduite pour stationner un véhicule sur la base d'une sortie en provenance d'un capteur de stationnement (465) du capteur secondaire (405, 410, 415, 420, 425, 430, 435, 440, 445, 450, 455, 460, 465), des alertes de proximité d'objet à un conducteur, sur la base d'une sortie en provenance d'un capteur de proximité infrarouge externe (440, 465) du capteur secondaire, des alertes de qualité de l'air à un conducteur, sur la base d'une sortie en provenance d'un capteur environnemental du capteur secondaire, une vitesse d'automobile, sur la base d'une sortie en provenance d'un accéléromètre (445) du capteur secondaire, et une alerte pour réveiller un conducteur sur la base d'images capturées par une caméra (420) du capteur secondaire qui capture des images d'un conducteur qui sont analysées par un logiciel en vue de détecter si le conducteur s'endort.

6. Dispositif de commande à distance (302) selon la revendication 1, dans lequel le capteur secondaire inclut un capteur de proximité (440, 465) qui détecte lorsque le dispositif de commande à distance se situe à l'intérieur ou au-delà d'une proximité prédéterminée d'un emplacement, et actionne un émetteur-récepteur RF (380) pour donner instruction au dispositif d'ouverture de porte de garage (100) de fermer la porte de garage (104) lorsque le dispositif de commande à distance se situe au-delà de la proximité prédéterminée et que la porte de garage est ouverte, et d'ouvrir la porte de garage lorsque le dispositif de commande à distance est à l'intérieure de la proximité prédéterminée et que la porte de garage est fermée.

7. Dispositif de commande à distance (302) selon la revendication 1, dans lequel le dispositif de commande à distance est fixé à un véhicule et le capteur secondaire (405, 410, 415, 420, 425, 430, 435, 440, 445, 450, 455, 460, 465) inclut un accéléromètre (445) qui détecte le mouvement du véhicule, et l'action en réponse consiste à communiquer, par le biais d'un émetteur-récepteur RF du composant actionnable secondaire, une alerte indiquant le mouvement du véhicule, à un dispositif sans fil (256) de l'utilisateur, par l'intermédiaire du dispositif d'ouverture de porte de garage (100) et d'un réseau de communication (254).

8. Procédé (700) pour des fonctions secondaires d'un dispositif de commande à distance de dispositif d'ouverture de porte de garage (302), le procédé comprenant les étapes consistant à :
recevoir une entrée au niveau d'une entrée utilisateur (382) d'un dispositif de commande à distance ;
en réponse à l'entrée, communiquer, par le biais d'un processeur électronique (370) du dispositif de commande à distance, une instruction d'entrée utilisateur à un dispositif d'ouverture de porte de garage (100), par l'intermédiaire d'une interface de communication sans fil du dispositif de commande à distance, l'instruction d'entrée utilisateur fournissant une instruction pour faire fonctionner un moteur (212) configuré pour entraîner une porte de garage (104) ;
détecter des stimuli dans un espace associé au dispositif de commande à distance, par le biais du processeur électronique, sur la base de données sensorielles fournies en sortie à partir d'un capteur secondaire (405, 410, 415, 420, 425, 430, 435, 440, 445, 450, 455, 460, 465) du dispositif de commande à distance ;
déterminer, par le biais du processeur électronique, une action en réponse aux stimuli détectés dans l'espace associé au dispositif de commande à distance ; et
commander, par le biais du processeur électronique, un composant actionnable secondaire du dispositif de commande à distance et un dispositif accessoire du dispositif d'ouverture de porte de garage pour mettre en oeuvre l'action en réponse, dans lequel le dispositif accessoire est configuré pour se coupler sélectivement à un port de module (223) sur le dispositif d'ouverture de porte de garage.

9. Procédé (700) selon la revendication 8, dans lequel le composant actionnable secondaire du dispositif de commande à distance (302) inclut l'interface de communication sans fil, et l'action en réponse inclut la communication d'informations basées sur les stimuli détectés par l'intermédiaire d'un réseau sans fil, à au moins un élément sélectionné parmi le groupe constitué par un dispositif de serveur électronique à distance et un téléphone sans fil (256).

10. Procédé (700) selon la revendication 8, dans lequel le capteur secondaire (405, 410, 415, 420, 425, 430, 435, 440, 445, 450, 455, 460, 465) inclut un microphone (425), les données sensorielles fournies en sortie à partir du microphone incluent des signaux audio comprenant une instruction vocale d'utilisateur qui indique l'action en réponse, l'action en réponse incluant au moins une action sélectionnée parmi le groupe consistant à envoyer une alerte à un dispositif sans fil d'utilisateur (256), à activer le composant actionnable secondaire, et à activer le dispositif accessoire qui est couplé au dispositif d'ouverture de porte de garage (100) ;
OU
le capteur secondaire comprend un capteur de proximité (440) qui détecte lorsque le dispositif de commande à distance se situe à l'intérieur ou au-delà d'une proximité prédéterminée d'un emplacement, et actionne un émetteur-récepteur RF (380) pour donner instruction au dispositif d'ouverture de porte de garage de fermer la porte de garage commandée par le dispositif d'ouverture de porte de garage lorsque le dispositif de commande à distance se situe au-delà de la proximité prédéterminée et que la porte de garage est ouverte, et d'ouvrir la porte de garage lorsque le dispositif de commande à distance est à l'intérieur de la proximité prédéterminée et que la porte de garage est fermée.

11. Procédé (700) selon la revendication 8, dans lequel le composant actionnable secondaire inclut une interface de communication sans fil supplémentaire, et l'action en réponse correspond à une action sélectionnée parmi le groupe consistant à envoyer une instruction pour fermer la porte de garage (104), à envoyer une instruction pour ouvrir la porte de garage, et à activer un accessoire de porte de garage qui est commandé par le dispositif d'ouverture de porte de garage (100) ;
OU
le composant actionnable secondaire du dispositif de commande à distance inclut un haut-parleur, et l'action en réponse inclut la communication de manière audible des informations par l'intermédiaire du haut-parleur (410) sur la base des stimuli détectés dans l'espace associé au dispositif de commande à distance, dans lequel les informations communiquées de manière audible correspondent à au moins une information sélectionnée parmi le groupe constitué par des instructions de conduite pour stationner un véhicule sur la base d'une sortie en provenance d'un capteur de stationnement (465) du capteur secondaire, des alertes de proximité d'objet à un conducteur sur la base d'une sortie en provenance d'un capteur de proximité infrarouge externe (440) du capteur secondaire, des alertes de qualité de l'air au conducteur sur la base d'une sortie en provenance d'un capteur environnemental du capteur secondaire, une vitesse d'automobile sur la base d'une sortie en provenance d'un accéléromètre (445) du capteur secondaire, et une alerte pour réveiller un conducteur sur la base d'images capturées par une caméra (420) du capteur secondaire qui capture des images d'un conducteur, et analysées par un logiciel en vue de détecter si le conducteur s'endort.

12. Procédé (700) selon la revendication 8, dans lequel le composant actionnable secondaire du dispositif de commande à distance (302) inclut un second capteur secondaire (405, 410, 415, 420, 425, 430, 435, 440, 445, 450, 455, 460, 465) qui est activé pour générer une seconde sortie de données sensorielles permettant la détection d'un second stimulus dans l'espace associé au dispositif de commande à distance, le procédé comprenant en outre la détermination, par le biais du processeur électronique, d'une seconde action en réponse sur la base du second stimulus.

13. Procédé (700) selon la revendication 8, dans lequel le dispositif de commande à distance est fixé à un véhicule, et le capteur secondaire inclut un accéléromètre (445) qui détecte un mouvement du véhicule, et, dans lequel, en réponse, un émetteur-récepteur RF du composant actionnable secondaire communique une alerte indiquant le mouvement du véhicule à un dispositif sans fil (256) d'un utilisateur, par l'intermédiaire du dispositif d'ouverture de porte de garage (100) et d'un réseau de communication (254).

14. Dispositif de commande à distance (302) d'un système d'ouverture de porte de garage, le dispositif de commande à distance comprenant :
une entrée utilisateur (382) configurée pour recevoir une entrée en provenance d'un utilisateur ;
une interface de communication sans fil configurée pour communiquer avec un dispositif d'ouverture de porte de garage (100) ; et
un processeur électronique (370) couplé en communication, par l'intermédiaire d'un bus de communication (390), à l'entrée utilisateur, et l'interface de communication sans fil, et un capteur (405, 410, 415, 420, 425, 430, 435, 440, 445, 450, 455, 460, 465) ;
dans lequel le processeur électronique est en outre couplé en communication à une mémoire (375) stockant des instructions qui, lorsqu'elles sont exécutées par le processeur électronique, amènent le processeur électronique à :
en réponse à l'entrée au niveau de l'entrée utilisateur, communiquer une instruction d'entrée utilisateur au dispositif d'ouverture de porte de garage pour faire fonctionner un moteur (212) configuré pour entraîner une porte de garage (104) ;
en réponse à des données reçues en provenance du capteur, transmettre des informations, basées sur les données de capteur, au dispositif d'ouverture de porte de garage par l'intermédiaire de l'interface de communication sans fil, pour une notification d'utilisateur ; et
commander un dispositif accessoire configuré pour se coupler sélectivement à un port de module (223) du dispositif d'ouverture de porte de garage, pour générer la notification d'utilisateur sur la base des informations.

15. Dispositif de commande à distance (302) selon la revendication 14, dans lequel le capteur (405, 410, 415, 420, 425, 430, 435, 440, 445, 450, 455, 460, 465) correspond à au moins un sélectionné parmi le groupe constitué par : un capteur de stationnement (465), un capteur de proximité infrarouge externe (440, 465), un capteur environnemental (430), un accéléromètre (445), une caméra (420) et un microphone (425) ;
OU
dans lequel le dispositif d'ouverture de porte de garage transmet la notification d'utilisateur sur la base des informations de données de capteur, à un dispositif utilisateur, par l'intermédiaire d'un réseau de communication couplé au dispositif d'ouverture de porte de garage, et dans lequel le dispositif utilisateur correspond à au moins un sélectionné parmi le groupe constitué par un dispositif de communication sans fil personnel, un dispositif informatique personnel et un serveur.
